# EUROPEAN PATENT SPECIFICATION

(11) **EP 2 040 373 B1**
(45) Date of publication and mention of the grant of the patent: **19.06.2013**
(21) Application number: 07742046.1
(22) Date of filing: 20.04.2007
(51) Int. Cl.: H02P 27/18, H02M 7/527, H02P 21/05, H02P 27/08

(54) **INVERTER DEVICE AND AIR CONDITIONER**
WECHSELRICHTEREINRICHTUNG UND KLIMAANLAGE
DISPOSITIF D'INVERSEUR ET CLIMATISEUR

(30) Priority: 24.04.2006 JP 2006118908
(43) Date of publication of application: 25.03.2009
(73) Proprietor: Panasonic Corporation, Kadoma-shi Osaka 571-8501 (JP)
(72) Inventor: FUKUE, Takashi Panasonic Corporation, Chuo-ku, Osaka 540-6207 (JP); MATSUSHIRO, Hideo Panasonic Corporation, Chuo-ku, Osaka 540-6207 (JP); OGAWA, Masanori Panasonic Corporation, Chuo-ku, Osaka 540-6207 (JP)
(74) Representative: Eisenführ, Speiser & Partner
(86) International application number: PCT/JP2007/058611
(87) International publication number: WO 2007/125826

(56) References cited:
- EP-A2- 1 603 226
- DE-A1- 19 537 526
- JP-A- 09 047 069
- JP-A- 09 172 783
- JP-A- 2001 054 300
- JP-A- 2002 218 799
- JP-A- 2002 223 600
- JP-A- 2004 135 410
- JP-A- 2004 320 985
- JP-A- 2004 343 837
- JP-A- 2005 168 115

## Description

### FIELD OF THE INVENTION

The present invention relates to technology for reducing distortion in an inverter, and relates more particularly to an inverter device and an air conditioner.

### BACKGROUND OF THE INVENTION

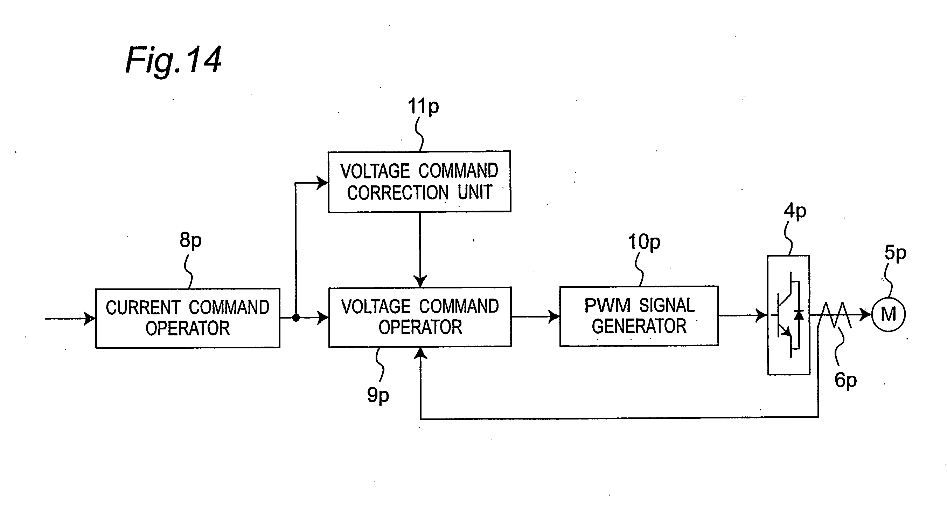

FIG. 14 shows an inverter device that reduces distortion in the alternating current flowing from the AC power supply that drives a motor as described in Japanese Laid-open Patent Publication No. H9-84385.

As shown in FIG. 14, this conventional inverter device has a DC/AC converter 4p, a current detector 6p, a current command operator 8p, a voltage command operator 9p, a PWM signal generator 10p, and a voltage command compensation unit 11p. The DC/AC converter 4p converts the output voltage of a smoothing unit (not shown in the figure) to a desired AC voltage to drive the motor 5p. The current detector 6p detects the current flowing to the motor 5p. The current command operator 8p computes the current control value for driving the motor 5p. The voltage command operator 9p computes the voltage control value based on the calculated current control value and the current detected by the current detector 6p. The PWM signal generator 10p then generates the signal for driving the DC/AC converter 4p from the voltage control value. The voltage command compensation unit 11p superimposes a compensation signal on the voltage control value.

Distortion is thus generally reduced by correcting the amplitude of the voltage control value based on the current control value.

Recent inverter devices, however, strive to reduce cost, size, and weight by significantly reducing the capacitance and scale of the capacitors and reactances used in the smoothing unit.

However, if a smoothing unit with insufficient capacitance is used, the output voltage of the smoothing unit pulsates greatly at twice the frequency of the AC supply frequency. In this case the inverter device that uses a voltage command compensation unit 11p according to the related art is affected by the voltage pulsation and cannot sufficiently suppress current distortion in the motor 5p.

Regarding further prior art, document EP 1 603 226 A2 discloses an electric motor car controller, wherein DC power is collected from an overhead wire and smoothed by a filter means comprising a reactor and a capacitor. The picked-up power is converted into AC power with a power converter, the AC power being supplied to a vehicle-driving AC motor. Operating conditions of the system are detected by detecting voltages and currents. Control signals are input defining a target speed of the motor, and voltage command signals are generated to obtain a supply voltage for the AC motor. Current command correcting values are calculated, and finally frequency components in a given band contained in the amount of energy of the capacitor are reduced by current command values.

Prior art document DE 195 37 526 A1 discloses an electric vehicle (such as an electric engine) wherein motors are driven by converters following a DC link circuit. A filter means includes at least a condenser and provides network filtering. A break resistor is basically parallel to the network filter together with a drive means in the form of a brake controller. The brake controller is triggered by a control unit which acts according to defined voltage or current values in the intermediate circuit. Disturbance components in the current input to the electric vehicle are sensed and the brake controller is operated to compensate for these disturbance components. A first and second control means or feedback control means are used to correspondingly operate the brake controller.

Document JP 2005/168 115 discloses a controller for a motor for a motor vehicle wherein degradation in the output torque of a motor is reduced. The operating conditions of the motor are sensed and a current command correcting portion determines current command correction values to obtain, after further data evaluation, final current command values to determine power supply to the motor.

Document JP 2004/135 410 discloses a current control device for an electric motor wherein proper operation of the electric motor is ensured in combination with a reduction of current ripples. Based on operating conditions of the electric motor and specifically corresponding to current values an inverter for supplying electric power to the electric motor is driven with current command values, and also PWM signals are used. Moreover, electric current correction quantities are defined.

According to document JP 2001/007228 a controller is described for driving an electric motor wherein currents to the motor are detected and a control of the operating conditions of the motor is performed in combination with the current command correction values. A torque current command value and a field current command value are corrected.

Document JP 2004/343 837 discloses a controller for a power converter, wherein distortion of an output current of the converter is reduced. The power converter includes a current type rectifier connected with an AC power supply and a current type inverter connected to the current type rectifier through a DC reactor. Current of power supply to an electric motor is detected and current command correction values are calculated to obtain proper control of the power supply to the motor.

### DISCLOSURE OF THE INVENTION

It is an object according to the present invention to provide an inverter device and an air conditioner which is able to suppress waveform distortion in the motor while using a smoothing unit from which the output voltage pulsates greatly.

According to the present invention this object is accomplished by an inverter device and an air conditioner including the inverter device as set out in the appended claims.

The inverter device of the present invention according to claim 1 has a rectification means that rectifies an AC voltage from an AC power supply and generates a rectified voltage; a smoothing means that smoothes the rectified voltage and generates a smooth voltage containing the waveform of a smooth voltage period corresponding to half the AC voltage period; a DC/AC conversion means that converts the smooth voltage to a drive voltage representing a pulse-width modulated alternating current, and supplies the drive voltage to a motor; a current detection means that detects the motor current flowing to the motor as a result of the drive voltage, the motor current containing the waveform of the smooth voltage period and a first waveform distortion, and generates a current detection signal; a target speed setting means that generates a target speed signal representing the target speed of the motor; a current command generating means that generates a current command signal representing a motor current control value based on the current detection signal and target speed signal; a first current command correction means that generates a first current command correction signal correcting the first waveform distortion based on the current detection signal and current command signal; a voltage command output means that generates and outputs a voltage command signal based on the current detection signal, current command signal, and first current command correction signal; and a pulse width modulation signal generating means that generates the pulse width modulation signal based on the voltage command signal.

The inverter device further comprises a voltage command correction means that generates a voltage command correction signal correcting the fourth waveform distortion based on the current detection signal and target speed signal; and a to-be-modulated signal generating means that adds the voltage command signal and the voltage command correction signal, and outputs the resulting sum signal as the to-be-modulated signal. The current detection means detects a motor current containing a fourth waveform distortion; and the pulse width modulation signal generating means generates the pulse width modulation signal based on the to-be-modulated signal. The DC/AC conversion means generates the drive voltage based on the pulse width modulation signal.

The voltage command correction means includes a control unit that generates a correction period signal representing either a correction period of zero length or a correction period of non-zero length in each smooth voltage period; and generates a voltage command correction signal when the correction period signal is in the non-zero correction period; and the control unit sets at least one of the start and end points in the non-zero correction period to a desired time in each smooth voltage period.

The air conditioner according to claim 15 has the inverter device described above and a compressor including a motor.

By reducing the power supply harmonics in the alternating current flowing through the AC supply and preventing contamination of the commercial power supply, power supply efficiency is improved not only in the inverter device but also in other electrical devices connected to the same power supply system.

Furthermore, because the physical size of the smoothing capacitor can be reduced, the inverter device can also be reduced in size and weight, and the size and weight of the air conditioner in which the inverter device is used can also be easily reduced. The cost of the inverter device and air conditioner can also be reduced by making the smoothing capacitor, inverter device, and air conditioner smaller. Eliminating the need for a power factor control circuit also contributes to reducing the cost of the inverter device and air conditioner.

The inverter device of the invention is not limited to use in air conditioners, and can be used in any electrical device that uses an inverter device.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of an inverter device according to a first embodiment of the invention.
FIG. 2 is a waveform chart of the main signals in the inverter device according to the first embodiment of the invention.
FIG. 3 is a waveform chart of the main signals in the inverter device according to the first embodiment of the invention.
FIG. 4A is a detailed block diagram of the current detection unit in the inverter device according to the first embodiment of the invention.
FIG. 4B is a detailed block diagram of an alternative current detection unit in the inverter device according to the first embodiment of the invention.
FIG. 5 is a detailed block diagram of the voltage command generating unit in the inverter device according to the first embodiment of the invention.
FIG. 6 is a detailed block diagram of one version of the voltage command correction unit in the inverter device according to the second embodiment of the invention.
FIG. 7 is a waveform chart of the main signals in the inverter device according to the first embodiment of the invention.
FIG. 8 is a waveform chart of the main signals in the inverter device according to the first embodiment of the invention.
FIG. 9 is a waveform chart of the main signals in the inverter device according to the first embodiment of the invention.
FIG. 10 is a waveform chart of the main signals in the inverter device according to the first embodiment of the invention.
FIG. 11 is a waveform chart of the main signals in the inverter device according to the first embodiment of the invention.
FIG. 12 is a waveform chart of the main signals in the inverter device according to the first embodiment of the invention.
FIG. 13 is a waveform chart of the main signals in the inverter device according to the first embodiment of the invention.
FIG. 14 is a block diagram of an inverter device according to the related art.

### KEY TO THE FIGURES

- 1: AC power supply
- 2: rectification unit
- 3: smoothing unit
- 4: DC/AC converter
- 5: motor
- 6: current detector
- 7: rotational phase detection unit
- 8: current command generating unit
- 9: voltage command generating unit
- 10: PWM signal generator
- 11: voltage command correction unit
- 12: voltage phase detection unit
- 13: current command correction unit
- 14: current command correction unit
- 15: target speed setting unit
- 16: adder
- 17: adder
- 18: current sensor

### DETAILED DESCRIPTION OF THE PREFERRED EMBODIMENTS

Some preferred embodiments of the invention are described below with reference to the accompanying figures wherein parts having the same arrangement, operation, and effect are denoted by the same reference numbers. Numbers used in the following description are by way of example only to describe the invention clearly, and the invention is not limited to these numbers in any way. Logic levels expressed as high and low, and switching states expressed as on and off, are also used by way of example only to describe a specific embodiment of the invention, and it will be obvious that the same effect can be achieved using different combinations of logic levels and switching states. Connections between specific elements and components are also shown by way of example only, and the connections achieving the function of the invention are not so limited. The following embodiments are also rendered using hardware and/or software components, but the hardware configurations can be achieved using software and the software configurations can be achieved using hardware.

### Embodiment 1

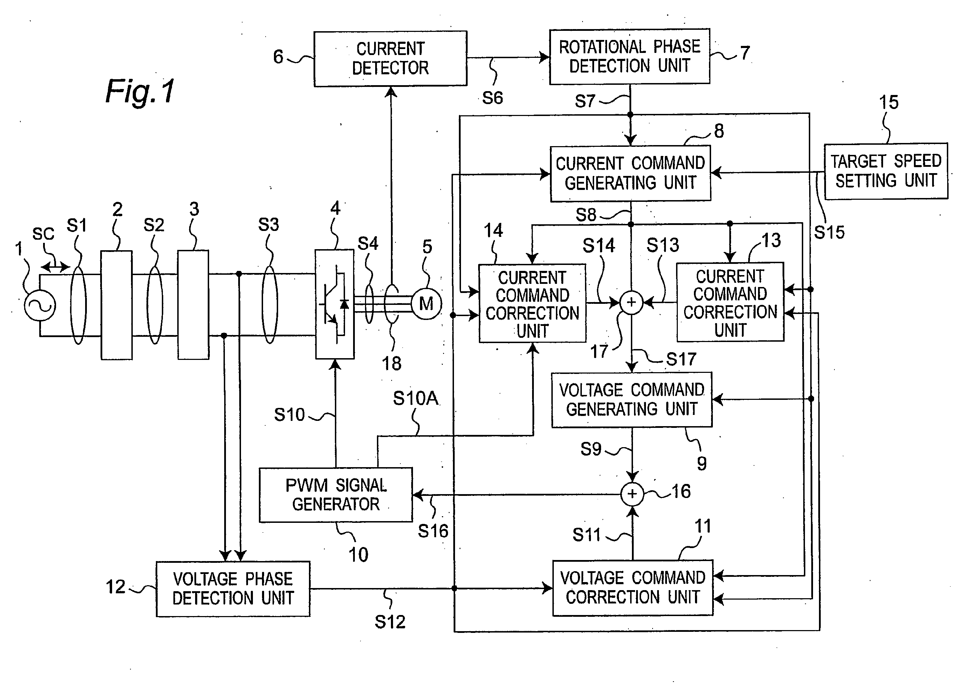

FIG. 1 is a block diagram showing an inverter device according to a first embodiment of the invention.

Referring to FIG. 1, the inverter device according to this first embodiment of the invention produces a drive voltage S4 by rectifying the single-phase AC voltage S1 from the AC power supply 1 and then alternating the output by means of pulse width modulation (PWM). The inverter device supplies this drive voltage S4 to the motor 5 to drive the motor 5. When the motor 5 turns, coolant is compressed in the compressor of the air conditioner. The inverter device according to this first embodiment of the invention includes a rectification unit 2, a smoothing unit 3, a DC/AC converter 4, a current detector 6, a rotational phase detection unit 7, a target speed setting unit 15, a current command generating unit 8, a current command correction unit 13, a current command correction unit 14, an adder 17, a voltage command generating unit 9, a voltage command correction unit 11, a voltage phase detection unit 12, an adder 16, and a PWM signal generator 10. The adder 17 and voltage command generating unit 9 render a voltage command output unit.

The rectification unit 2 is rendered by a diode bridge to which the AC voltage S1 from the AC power supply 1 is input. An AC current SC thus flows to the AC power supply 1. The rectification unit 2 full-wave rectifies the AC voltage S1 and outputs rectified voltage S2. The smoothing unit 3 is rendered by a smoothing capacitor (not shown in the figure) that is parallel connected to the rectified voltage S2, and a reactor (not shown in the figure) that is connected in series. The smoothing unit 3 smoothes the rectified voltage S2, and outputs a smooth voltage S3 that pulsates greatly at a frequency of twice the AC voltage S1. The period of this smooth voltage S3 at twice the frequency of the AC voltage S1 is called the smooth voltage period, which is half the AC voltage period. The DC/AC converter 4 is rendered by a semiconductor switching device, and converts the smooth voltage S3 to the drive voltage S4, which represents a PWM alternating current. The voltage phase detection unit 12 detects the voltage phase signal S12, which represents the phase of the smooth voltage S3.

The current detector 6 detects the motor current flowing to the motor 5 based on the drive voltage S4, and outputs a current detection signal S6. The current detection signal S6 has a waveform of the smooth voltage period, and includes waveform distortion.
The rotational phase detection unit 7 outputs a rotational phase signal S7 denoting the phase of motor 5 rotation based on the current detection signal S6.
The target speed setting unit 15 generates a target speed signal S15 denoting the target speed of the motor 5.
Based on the rotational phase signal S7, the voltage phase signal S12, and the target speed signal S15, the current command generating unit 8 generates a current command signal S8 representing the motor current control value.

The current command correction unit 13 generates a current command correction signal S13 to correct waveform distortion in the current detection signal S6 based on the voltage phase signal S12, rotational phase signal S7, and current command signal S8.
The current command correction unit 14 generates a current command correction signal S14 to correct waveform distortion in the current detection signal S6 based on the voltage phase signal S12, rotational phase signal S7, current command signal S8, and commutation signal S10A (further described below).
The adder 17 adds the current command correction signal S13 and current command correction signal S14 to the current command signal S8, and generates a sum signal S17.
Based on the rotational phase signal S7 and sum signal S17, the voltage command generating unit 9 generates a voltage command signal S9 denoting a control value for the unmodulated signal before pulse width modulation.

Based on the voltage phase signal S12, the rotational phase signal S7, and the current command signal S8, the voltage command correction unit 11 generates a voltage command correction signal S11 that corrects the waveform distortion of the current detection signal S6.
The adder 16 adds the voltage command signal S9 and the voltage command correction signal S11, and outputs sum signal S16. The adder 16 is also called a to-be-modulated signal generating unit, and the sum signal S16 is also called a to-be-modulated signal (that is, the signal to be modulated or a baseband signal).
The PWM signal generator 10 generates the commutation signal S10A denoting the commutation timing of the motor current based on the sum signal S16. In addition, the PWM signal generator 10 pulse width modulates the sum signal S16 as the to-be-modulated signal to be modulated using a sawtooth carrier wave signal of several kilohertz to several ten kilohertz, and outputs a PWM signal S10 with a PWM waveform.
Based on this PWM signal S10, the DC/AC converter 4 switches the smooth voltage S3 and generates the drive voltage S4.

The motor current is the current flowing between the DC/AC converter 4 and motor 5, and when the motor 5 uses a wye connection matches the phase current of the motor 5. In a typical embodiment the current detector 6 directly detects the motor current using a current sensor 18. Alternatively, the current detector 6 indirectly detects the estimated motor current from the bus current of the DC/AC converter 4, that is, from at least one of the two DC/AC converter 4 terminals to which the smooth voltage S3 is applied.

The reactor of the smoothing unit 3 is used to reduce the peak of the sudden charge current applied to the smoothing capacitor when the AC voltage S1 turns on. The reactor is located between the AC power supply 1 and the smoothing capacitor of the smoothing unit 3, but could be provided on the AC power supply 1 side or the smoothing unit 3 side of the rectification unit 2.

The reactance L1 of the reactor in the smoothing unit 3 and the capacitance C1 of the smoothing capacitor are set so that the resonance frequency fc = 1 / (2□ x (L1 x C1)^{Λ} 1/2) is at least 40 times the frequency of the AC power supply 1. In the first embodiment of the invention the frequency of the AC power supply 1 is 50 Hz. Therefore, if the reactance L1 = 0.5 mH and the capacitance C1 = 10 µF, the resonance frequency fc (=2250 Hz) > 40 x 50 Hz (= 2000 Hz), and is at least 40 times the frequency of the AC power supply 1. By thus setting the resonance frequency fc to 40 or more times the frequency of the AC power supply 1, a smaller and lighter reactor and smoothing capacitor can be used, and the cost can be reduced. This also eliminates the need for a power factor correction (PFC) circuit to handle the resonance frequency, and thus helps to further reduce cost.

The smoothing capacitor is typically a film capacitor. Because a film capacitor has a semi-permanent life expectancy and enables ignoring the effect of ambient embodiment on life expectancy, an air conditioner that uses the inverter according to this embodiment of the invention affords greater freedom selecting the operating environment in which it will be used.

The operation of the inverter device according to this embodiment of the invention is described next.

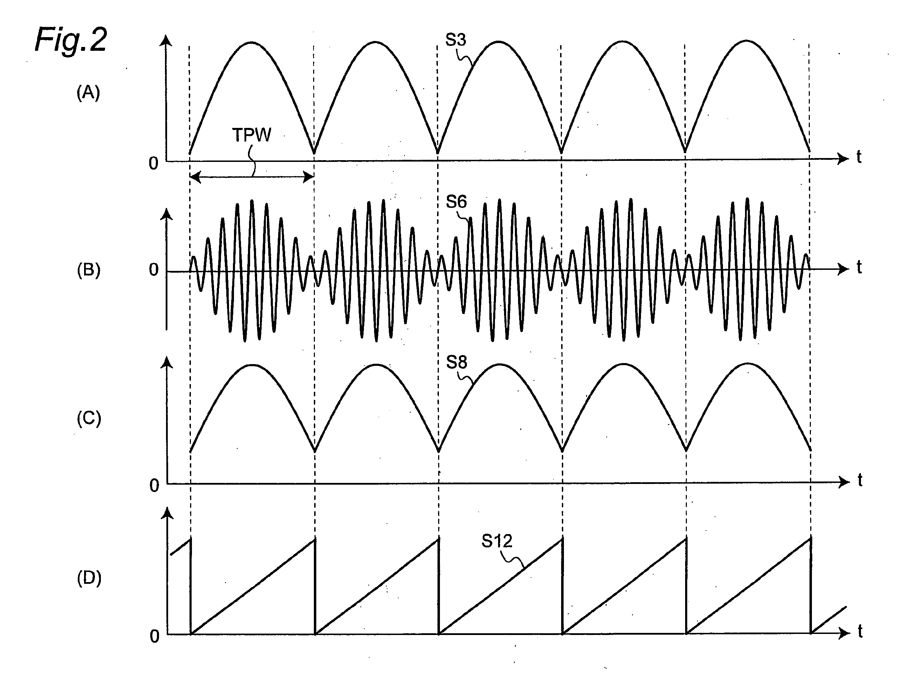

FIG. 2 is a waveform chart of the main signals referenced to time t. FIG. 2 (A) shows the waveform of the smooth voltage S3. By greatly decreasing the capacitance of the smoothing capacitor of the smoothing unit 3, the smooth voltage S3 pulsates greatly at a frequency of twice the power supply frequency (the "smooth voltage frequency" below) and an amplitude with a ripple factor of 80% or more. The inverse of the smooth voltage frequency is called the smooth voltage period TPW (see FIG. 2 (A)). In this first embodiment of the invention the smooth voltage frequency is 100 Hz and the smooth voltage period TPW is 10 ms.

FIG. 2 (B) shows the waveform of the current detection signal S6. The current detection signal S6 is the carrier wave signal after amplitude modulation using the to-be-modulated signal indicated by the envelope curve. In this case the carrier wave signal is a sine wave that contains waveform distortion and has an electrical angle frequency equal to the product of the motor speed times the number of polar pairs (half the number of poles) in the motor 5. The to-be-modulated signal is substantially identical to the smooth voltage S3. The current detection signal S6 is not a communication signal but for convenience of description is described with modulation terminology.

In the first embodiment of the invention, if the motor 5 has 3 pole pairs and runs at 3500 rpm, the electrical angle frequency of the current detection signal S6 is 3 x 3500 (rpm)/60 (s) = 175 (Hz). The inverse of the electrical angle frequency is called the electrical angle period. In this example the electrical angle period is approximately 5.7 (msec).
FIG. 2 (D) shows the waveform of the voltage phase signal S12. The voltage phase signal S12 is a sawtooth wave that goes from 0° to 360° during the smooth voltage period TPW.

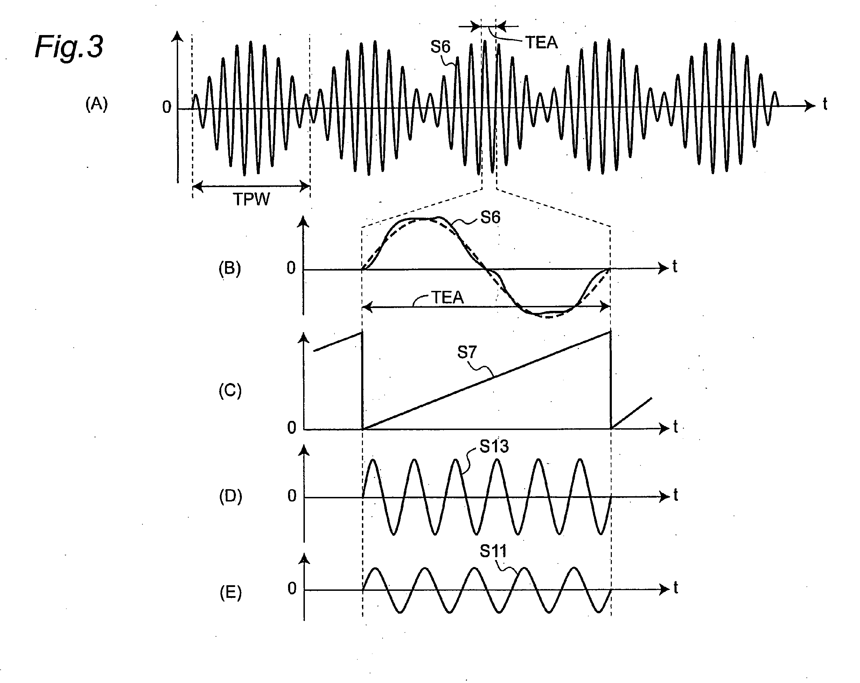

FIG. 3 is a waveform chart of the main signals referenced to time t. FIG. 3 (A) shows the same current detection signal S6 shown in FIG. 2 (B). FIG. 3 (B) shows the current detection signal S6 in FIG. 3 (A) while expanding the time base of the electrical angle period TEA of the current detection signal S6. The current detection signal S6 contains waveform distortion known as current distortion, and deviates slightly from the distortion-free waveform indicated by the dotted line.
FIG. 3 (C) to (E) also use the same expanded time base as used in (B). FIG. 3 (C) shows the waveform of the rotational phase signal S7. The rotational phase signal S7 is a sawtooth wave that goes from 0° to 360° during the electrical angle period TEA.

### Configuration and operation of the current command generating unit 8

The current command generating unit 8 generates a current command signal S8 (shown in FIG. 2 (C)) in which the top half portion of a sine wave repeats each smooth voltage period TPW represented by the voltage phase signal S12. The amplitude of the current command signal S8 is controlled by comparing the actual speed acquired from the rotational phase signal S7 and the target speed represented by the target speed signal S15 so that the difference between said actual speed and said target speed decreases. More specifically, the amplitude of the current command signal S8 is increased if the actual speed is less than the target speed, and the amplitude of the current command signal S8 is decreased if the actual speed is greater than the target speed. In order to determine the actual speed, the current command generating unit 8 detects only the timing of each electrical angle period TEA of the rotational phase signal S7 and does not detect the waveform distortion of the current detection signal S6 contained in the rotational phase signal S7. As a result, the current command generating unit 8 does not impose the waveform distortion of the rotational phase signal S7 on the current command signal S8. In addition to the rotational phase signal S7, the current command generating unit 8 generates the current command signal S8 based on the voltage phase signal S12 and the target speed signal S15 containing no waveform distortion. As a result, the current command signal S8 does not contain the waveform distortion of the current detection signal S6.

### Configuration and operation of the current command correction unit 13

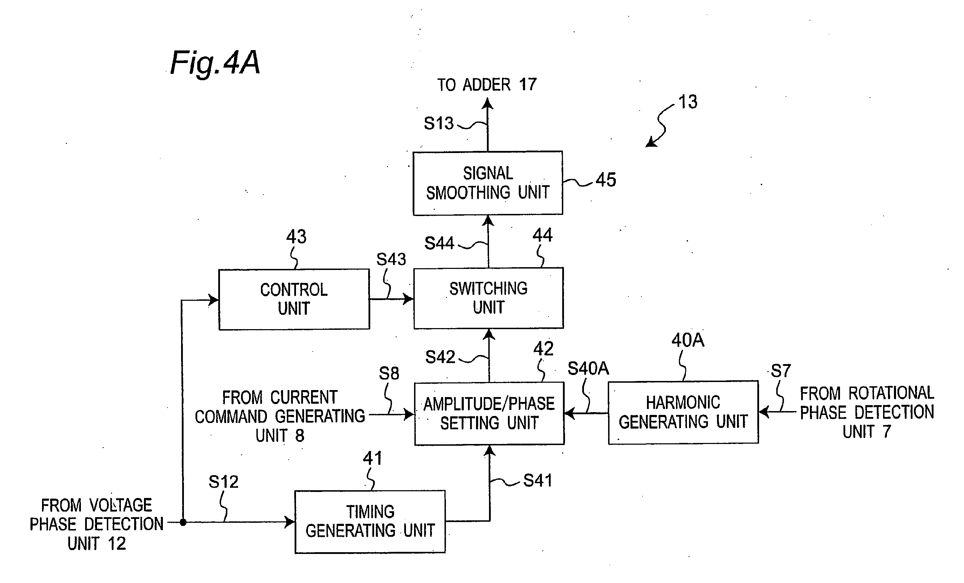

The configuration and operation of the current command correction unit 13 in the first embodiment of the invention is described next. FIG. 4A is a detailed block diagram showing the configuration of the current command correction unit 13 in the first embodiment of the invention. The current command correction unit 13 includes a harmonic generating unit 40A, a timing generating unit 41, an amplitude/phase setting unit 42, a control unit 43, a switching unit 44, and a signal smoothing unit 45.

The DC/AC converter 4 has, for example, three switching circuit pairs each containing one high potential transistor and one low potential transistor, and commutates six times each electrical angle period TEA. So that the high potential transistor and low potential transistor in each switching circuit are not simultaneously in the on state during the six commutations, dead time in which both transistors are off is provided. Because this dead time results from commutating six times in the electrical angle period TEA, waveform distortion composed of mainly the sixth-order harmonic of the electrical angle frequency is introduced to the current detection signal S6. If the number of commutations within the electrical angle period TEA changes, harmonic distortion of an order equal to the number of commutations occurs.

The harmonic generating unit 40A generates a harmonic signal S40A representing the sixth harmonic of the electrical angle frequency based on the rotational phase signal S7. Because the electrical angle frequency is 175 Hz in the above example, the frequency of the harmonic signal S40A is 175 x 6 = 1050 Hz.
The timing generating unit 41 generates a timing signal S41 denoting timing within the smooth voltage period TPW based on the S12. In a typical application the timing generating unit 41 divides the smooth voltage period TPW into a plurality of different periods (called secondary smooth voltage periods), and generates timing signals S41 indicating the beginning and end of each secondary smooth voltage period.

The amplitude/phase setting unit 42 sets a reference amplitude that changes in the smooth voltage period TPW based on the timing signal S41. The amplitude/phase setting unit 42 multiplies this reference amplitude by the typical amplitude of the current command signal S8, and outputs the current control amplitude. The typical amplitude of the current command signal S8 (FIG. 2 (C)) is set to the peak value in the smooth voltage period TPW. The current control amplitude is thus controlled so that the difference between the actual speed and the target speed decreases as determined by comparison. The amplitude/phase setting unit 42 sets the amplitude of the harmonic signal S40A to this current control amplitude and generates an amplitude/phase setting signal S42 representing this harmonic signal S40A.

The amplitude of the amplitude/phase setting signal S42 is typically substantially constant within each secondary smooth voltage period, and can change in each secondary smooth voltage period within the smooth voltage period TPW. For example, the amplitude of the amplitude/phase setting signal S42 changes in each secondary smooth voltage period substantially proportionally to the amplitude of the smooth voltage S3. At the same time, the amplitude of the amplitude/phase setting signal S42 in each secondary smooth voltage period changes proportionally to the typical amplitude of the current command signal S8.

The amplitude/phase setting unit 42 sets the phase of the amplitude/phase setting signal S42 based on the timing signal S41. The phase of the amplitude/phase setting signal S42 is typically substantially constant in each secondary smooth voltage period, and can change each time the secondary smooth voltage period changes in the smooth voltage period TPW.

The control unit 43 generates a control signal S43 for the period in which the amplitude/phase setting signal S42 is passed (the pass period) in the smooth voltage period TPW or each smooth voltage period TPW based on the voltage phase signal S12. The switching unit 44 switches on and off based on the control signal S43, and outputs a pass signal S44 representing the amplitude/phase setting signal S42 that is passed in the pass period. The timing of the beginning and end of the pass period can vary randomly within the smooth voltage period TPW and are set for each smooth voltage period TPW. Either a pass period in which the amplitude/phase setting signal S42 passes slightly, or a no-pass period in which the signal is completely blocked, can be set randomly in each smooth voltage period TPW.

The pass period is also called a correction period of a non-zero length, and the no-pass period is also called a zero-length correction period. The S43 is also called a correction period signal. More specifically, the control signal S43 represents either a zero-length correction period or a non-zero-length correction period in each smooth voltage period TPW. The control unit 43 sets either or both the beginning and the end of the non-zero-length correction period to a desired time in each smooth voltage period TPW in the non-zero-length correction period.

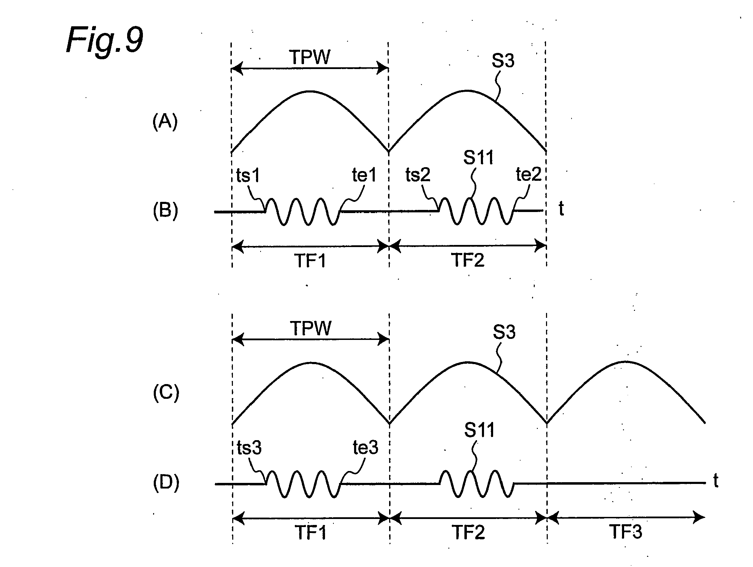

FIG. 9 is a waveform chart describing the operation of the current command correction unit 13 as shown in FIG. 4A. FIG. 9 (A) and FIG. 9 (C) show the smooth voltage S3 in the smooth voltage period TPW, and FIG. 9 (B) and FIG. 9 (D) show the current command correction signal S13 for the smooth voltage S3. FIG. 9 (A) to FIG. 9 (D) describe primarily the operation of the control unit 43 and switching unit 44, and the changes in each secondary smooth voltage period are omitted.

In FIG. 9 (B) the control unit 43 sets the pass period from starting time ts1 to end time te1 for each smooth voltage period TPW, and the switching unit 44 turns on in the pass period to output the current command correction signal S13. The start time ts1 and end time te1 are set randomly in each smooth voltage period TPW by the control unit 43. More specifically, the timing of the start time ts1 in period TE1 of the smooth voltage period TPW, and the timing of the start time ts2 in period TE2, can be different. The timing of the end time te1 in period TE1 of the smooth voltage period TPW, and the timing of the end time te2 in period TE2, can also be changed. The timing of either or both of the start time and end time can also be changed.

In FIG. 9 (D) the control unit 43 controls whether there is a pass period from the start time ts3 to the end time te3 by randomly setting either in each smooth voltage period TPW. More specifically, periods TF1 and TF2 in the smooth voltage period TPW are the pass periods in which at least a part of the amplitude/phase setting signal S42 is passed, and period TF3 is the no-pass period in which the amplitude/phase setting signal S42 is blocked completely.

As described above, the smooth voltage S3 pulsates greatly in the smooth voltage period TPW (FIG. 9 (A) and FIG. 9 (C)), and the current detection signal S6 (FIG. 2 (B)) is a waveform with a greatly pulsating envelope in the smooth voltage period TPW. When the amplitude of the current detection signal S6 goes low in each smooth voltage period TPW, the detection precision of the actual speed from the rotational phase signal S7 deteriorates, and the frequency and phase precision of the amplitude/phase setting signal S42 deteriorates. The amplitude of the current command signal S8 also drops, and the amplitude of the sixth-order harmonic distortion therefore becomes unstable.

In such cases the control unit 43 and switching unit 44 are used to interrupt correction only in the low amplitude period of the current detection signal S6. Interrupting this correction is not a problem because the waveform distortion of the current detection signal S6 is small even when correction is interrupted. This prevents amplifying correction error.

The timing of the start and end of the pass period in each smooth voltage period TPW varies randomly, and either a pass period or no-pass period is set randomly in each smooth voltage period TPW. This enables suppressing introducing new distortion caused by the mutual modulation of the sixth-order harmonic distortion and periodicity of the smooth voltage period TPW in the pass period in the current detection signal S6.

The signal smoothing unit 45 smoothes sudden changes in the amplitude and phase of the pass signal S44 and outputs the smoothed signal as the current command correction signal S13. If the pass signal S44 is sufficiently smooth, the signal smoothing unit 45 can be omitted.

In another aspect of the invention the amplitude/phase setting unit 42 generates a plurality of secondary amplitude/phase setting signals of different amplitude or phase based on the harmonic signal S40A and the current command signal S8. The amplitude/phase setting unit 42 also selects one of these plural secondary amplitude/phase setting signals in each secondary smooth voltage period based on the timing signal S41 to output the amplitude/phase setting signal S42.

In yet another aspect of the invention the harmonic generating unit 40A shown in FIG. 4A is omitted, and the rotational phase signal S7 is input directly to the amplitude/phase setting unit 42. In the amplitude/phase setting unit 42 the frequency of the amplitude/phase setting signal S42 is preset to a predetermined value substantially equal to the sixth-order harmonic distortion. Based on the rotational phase signal S7, the phase of the amplitude/phase setting signal S42 is advanced if the actual speed increases and delayed if the actual speed decreases.

By rendering the current command correction unit 13 as described above, the current command correction unit 13 generates a current command correction signal S13 with a frequency that is substantially equal to the sixth-order harmonic distortion (1050 Hz in the above example). The amplitude of the current command correction signal S13 is substantially constant in each secondary smooth voltage period, and can vary substantially proportionally to the amplitude of the smooth voltage S3, for example, each time the secondary smooth voltage period changes in the smooth voltage period TPW.
In addition, the amplitude of the current command correction signal S13 in each secondary smooth voltage period changes proportionally to the typical amplitude of the current command signal S8, and is controlled so that the difference between the actual speed and the target speed decreases. As a result, the amplitude of the current command correction signal S13 and the amplitude of the voltage command correction signal S11 can be made substantially equal to the amplitude of the sixth harmonic in the current detection signal S6.

The amplitude/phase setting unit 42 also first adjusts the phase of the current command correction signal S13 in each secondary smooth voltage period so that waveform distortion is reduced in the current detection signal S6, the smooth voltage S3, and the AC current SC. If the phase of the current command correction signal S13 also varies in each secondary smooth voltage period, waveform distortion in the AC current SC described above may also decrease. The phase of the current command correction signal S13 after adjustment is substantially the inverse of the phase of the sixth harmonic contained in the current detection signal S6. Because the phase of the sixth harmonic is in a specific relationship to the rotational phase signal S7 and the amplitude/phase setting unit 42 operates on the rotational phase signal S7, if the amplitude/phase setting unit 42 first adjusts the phase, this inverse phase relationship can be maintained even if the adjusted phase is then fixed.

FIG. 3 (D) shows an example of the waveform of the current command correction signal S13. The current command correction signal S13 has six periods of the sixth harmonic wave in the electrical angle period TEA.

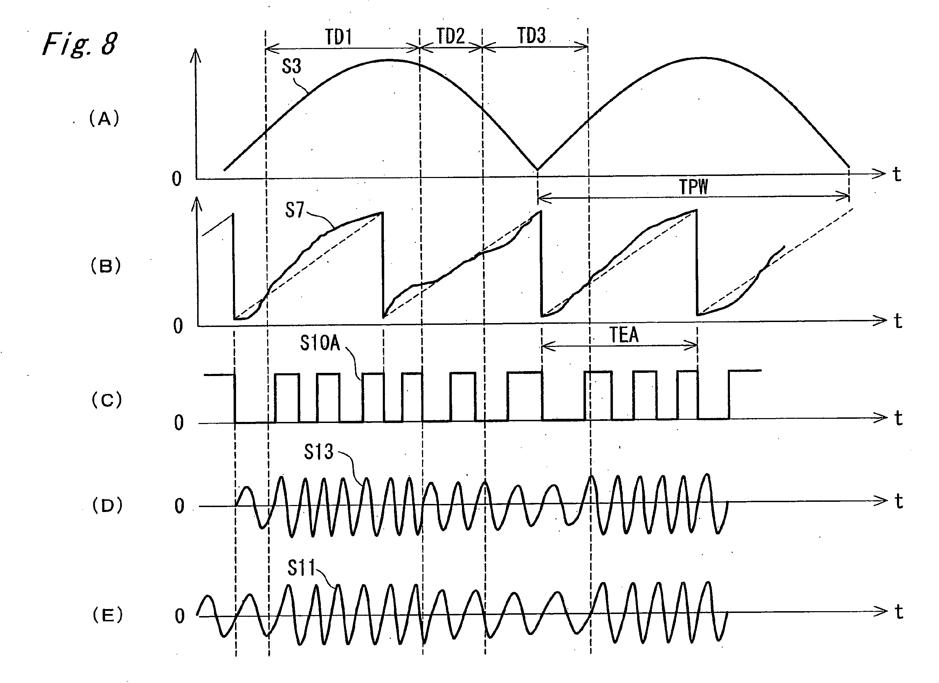

FIG. 8 is a waveform chart describing the operation of the first embodiment shown in FIG. 1. FIG. 8 (A) shows the waveform of the smooth voltage S3, and FIG. 8 (B) to FIG. 8 (D) show the rotational phase signal S7, the commutation signal S10A, and the current command correction signal S13 corresponding to the smooth voltage S3. In order to see the waveform in FIG. 8 (D) better, the actual speed is reduced and the electrical angle period TEA is increased compared with the examples shown in FIG. 3 (A) and FIG. 3 (B). The current command correction signal S13 in FIG. 8 (D) contains six sixth-order harmonic waves in one electrical angle period TEA. The amplitude and phase of the current command correction signal S13 change in each of the secondary smooth voltage periods TD1, TD2, TD3 in the smooth voltage period TPW. The timing when the current command correction signal S13 level is greatest is not necessarily coincident to the timing when the smooth voltage S3 peaks, and is offset slightly.

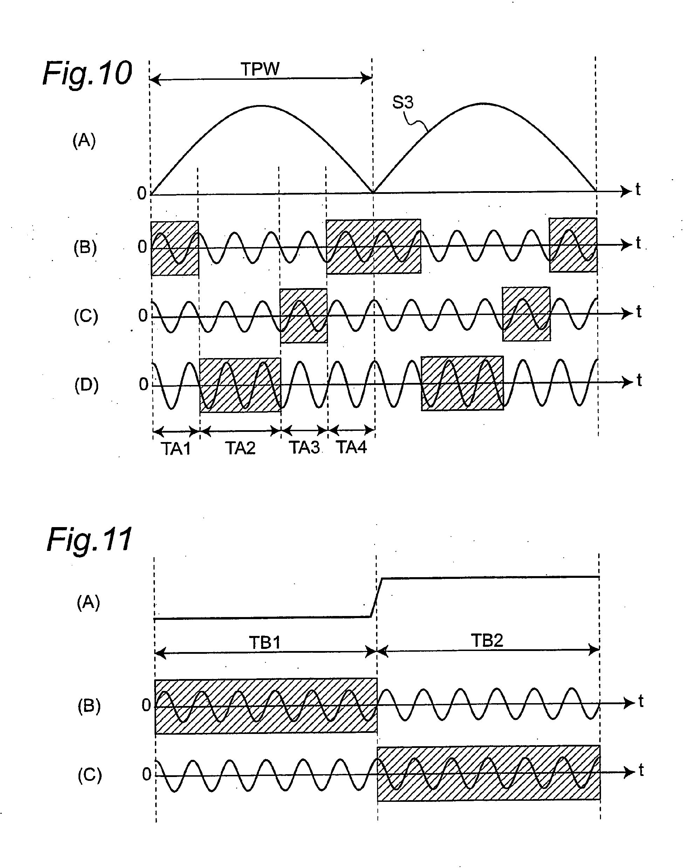

FIG. 10 is a waveform chart describing the operation of the current command correction unit 13 shown in FIG. 4A. FIG. 10 (A) shows the waveform of the smooth voltage S3, and FIG. 10 (B), FIG. 10 (C), and FIG. 10 (D) show the waveform of the secondary amplitude/phase setting signal for the smooth voltage S3.
The frequency of these three secondary amplitude/phase setting signals is preset to the frequency of the harmonic signal S40A with the configuration shown in FIG. 4A, and is preset to a predetermined value substantially equal to the sixth-order harmonic distortion if the harmonic signal S40A is omitted. The amplitude and phase have a predetermined value in each of the three signals. The amplitude of the secondary amplitude/phase setting signal in FIG. 10 (C) is equal to the secondary amplitude/phase setting signal in FIG. 10 (B) while the phase is advanced. The amplitude of the secondary amplitude/phase setting signal in FIG. 10 (D) is greater than the secondary amplitude/phase setting signal in FIG. 10 (C) but the phase is the same.

The smooth voltage period TPW is divided into secondary smooth voltage periods TA1, TA2, TA3, TA4. The secondary amplitude/phase setting signal in FIG. 10 (B) is selected in secondary smooth voltage periods TA1 and TA4, the secondary amplitude/phase setting signal in FIG. 10 (D) is selected in secondary smooth voltage period TA2, and the secondary amplitude/phase setting signal in FIG. 10 (C) is selected in secondary smooth voltage period TA3. The selected secondary amplitude/phase setting signals are indicated by hash marks in the figures. The selected secondary amplitude/phase setting signal is then used to generate the current command correction signal S13.

When the smooth voltage S3 is high, the current command correction signal S13 can thus be increased, and when the smooth voltage S3 is low, the current command correction signal S13 can be decreased. As a result, the current command correction signal S13 can be set according to the waveform distortion of the current detection signal S6. In addition, by tuning the phase as shown in FIG. 10 (C), a current command correction signal S13 with inverse phase to the waveform distortion of the current detection signal S6 can be generated.

FIG. 11 is a waveform chart describing the operation of the current command correction unit 13. FIG. 11 (A) shows the actual speed determined from the rotational phase signal S7, and increases from period TB1 to period TB2. FIG. 11 (B) and FIG. 11 (C) show the waveform of the secondary amplitude/phase setting signal in periods TB1 and TB2. The frequency of these two secondary amplitude/phase setting signals is preset to a predetermined value substantially equal to the fifth-order harmonic distortion. The amplitude and phase of each signal have a predetermined value. The amplitude of the secondary amplitude/phase setting signal in FIG. 11 (C) is equal to the secondary amplitude/phase setting signal in FIG. 11 (B) while the phase is advanced.

The secondary amplitude/phase setting signal in FIG. 11 (B) is selected in period TB1, and the secondary amplitude/phase setting signal in FIG. 11 (C) is selected in period TB2, as indicated by the hash marks. The selected secondary amplitude/phase setting signals are combined to generate the current command correction signal S13. As a result, the phase of the current command correction signal S13 can be advanced when the actual speed rises, and a current command correction signal S13 that is inverse phase to the waveform distortion of the current detection signal S6 can be generated.

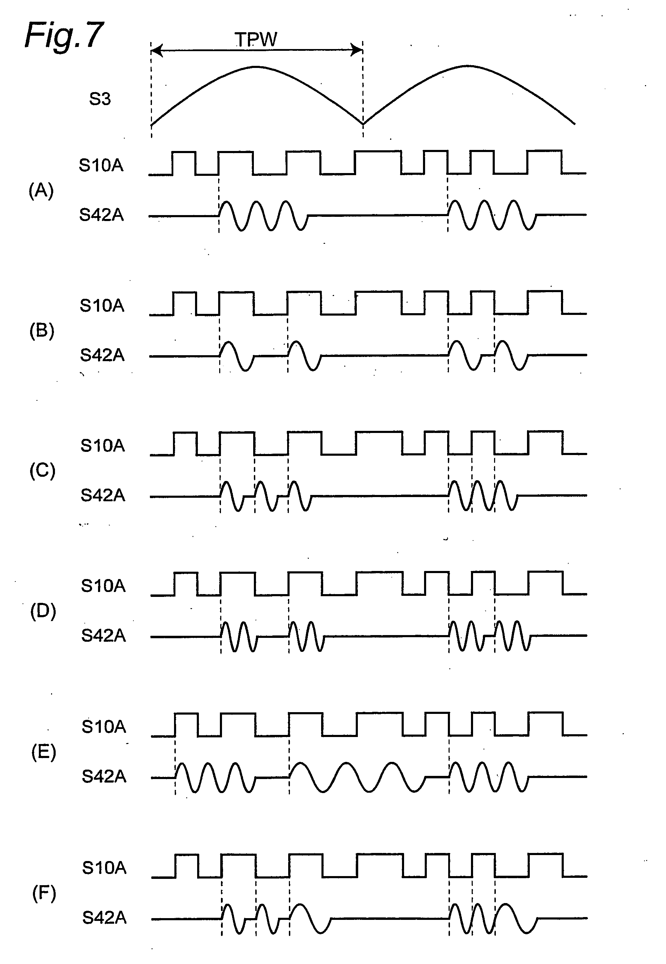

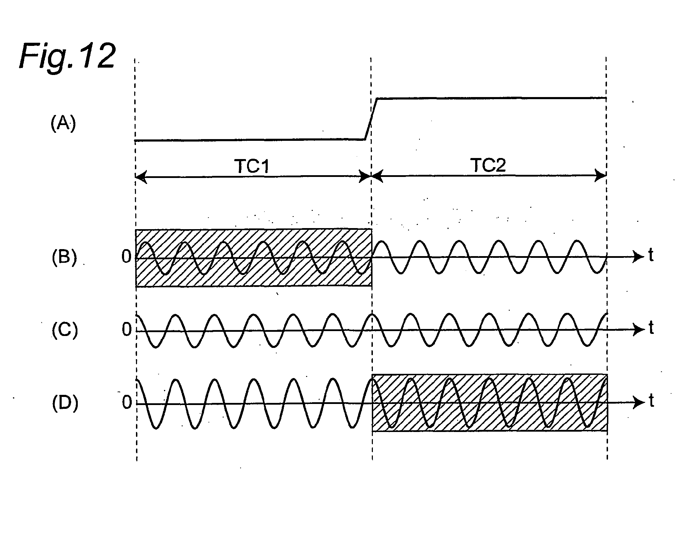

FIG. 12 are waveform charts describing the operation of the current command correction unit 13. FIG. 12 (A) shows the level of the current command signal S8, which rises from period TC1 to period TC2. FIG. 12 (B), (C), and (D) show the secondary amplitude/phase setting signals. The frequency of the secondary amplitude/phase setting signals in the case of FIG. 4A is preset to the frequency of the harmonic signal S40A, and is preset to a predetermined value substantially equal to the fifth-order harmonic distortion in FIG. 7C. The amplitude and phase are set to a predetermined value on each of the three channels. The amplitude of the secondary amplitude/phase setting signal in FIG. 12 (C) is equal to the secondary amplitude/phase setting signal in FIG. 12 (B) while the phase is advanced. The amplitude of the secondary amplitude/phase setting signal in FIG. 12 (D) is greater than the amplitude of the secondary amplitude/phase setting signal in FIG. 12 (C) while the phase is the same.

The secondary amplitude/phase setting signal in FIG. 12 (B) is selected in period TC1, and the secondary amplitude/phase setting signal in FIG. 12 (D) is selected in period TC2, as indicated by the hash marks. The selected secondary amplitude/phase setting signals are combined to generate the current command correction signal S13. As a result, the amplitude of the current command correction signal S13 can be further increased when the level of the current command signal S8 rises. As a result, a current command correction signal S13 of a substantially equal level can be generated relative to the waveform distortion of the current detection signal S6, which rises with the current command signal S8.

In the waveforms shown in FIG. 10 (A) to FIG. 12 (C) the switching unit 44 shown in FIG. 4A passes all amplitude phase setting signals S42 and generates the current command correction signal S13.

Note that the harmonic signal S40A represents the sixth harmonic of the electrical angle frequency, but may be a periodic signal that also includes harmonics other than the sixth.

### Configuration and operation of the current command correction unit 14

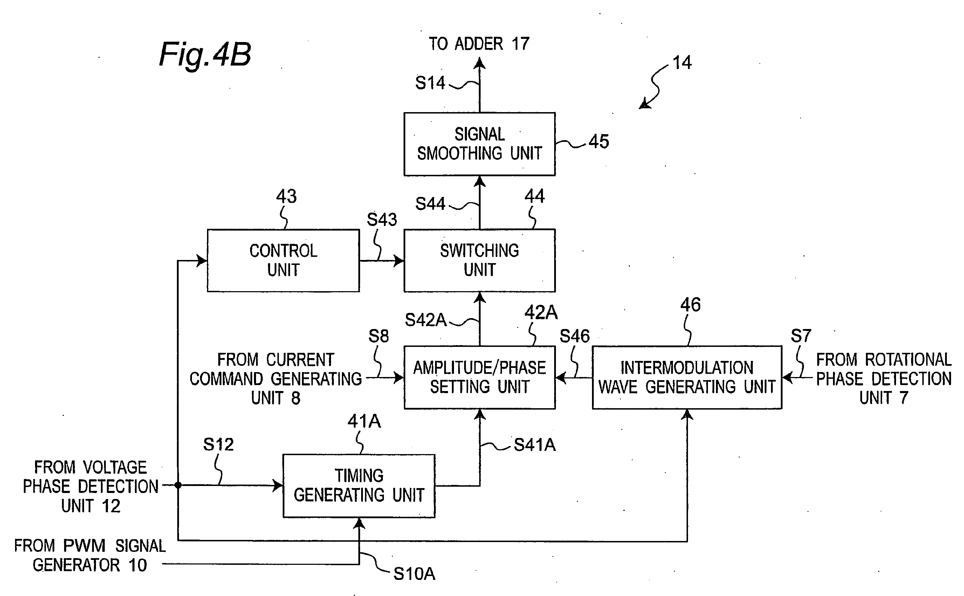

The configuration and operation of the current command correction unit 14 in the first embodiment of the invention is described next. As shown in the detailed block diagram in FIG. 4B, the current command correction unit 14 includes an intermodulation wave generating unit 46, a timing generating unit 41A, a amplitude/phase setting unit 42A, a control unit 43, a switching unit 44, and a signal smoothing unit 45. The current command correction unit 14 is described below with emphasis on the differences with the current command correction unit 13. Other aspects of the configuration, operation, and effect of the current command correction unit 14 are the same as the current command correction unit 13, and further description thereof is omitted below.

The intermodulation wave generating unit 46 generates an electrical angle harmonic signal representing the sixth harmonic of the electrical angle frequency based on the rotational phase signal S7. Based on the voltage phase signal S12, the intermodulation wave generating unit 46 also generates a smooth voltage harmonic signal as a signal with the smooth voltage frequency and a harmonic frequency thereof. The intermodulation wave generating unit 46 also generates an intermodulation wave signal S46 based on the sum and the difference between the frequency of the electrical angle harmonic signal and the frequency of the smooth voltage harmonic signal. Note that the smooth voltage S3 may be input instead of the voltage phase signal S12 to the intermodulation wave generating unit 46 to generate the smooth voltage harmonic signal.

As described above, because the electrical angle frequency is 175 Hz and the smooth voltage frequency is 100 Hz, the frequency of the electrical angle harmonic signal is 1050 Hz, the frequency of the smooth voltage harmonic signal is a multiple of 100 Hz, such as 100 Hz or 200 Hz. The frequency of the intermodulation wave signal S46 is therefore set to a frequency at a 100 Hz increment from 1050 Hz, such as 850 Hz, 950 Hz, 1050 Hz, 1150 Hz, or 1250 Hz.

Based on the voltage phase signal S12 and the commutation signal S10A, the timing generating unit 41A generates a timing signal S41A denoting the timing in the smooth voltage period TPW. The commutation signal S10A alternates between a low level and a high level with each commutation, for example. Typically, the timing generating unit 41A generates the commutation timing for both the rising edge and falling edge where the commutation signal S10A changes between low and high. Based on the voltage phase signal S12, the timing generating unit 41A also outputs the commutation timing as the timing signal S41A only for a predetermined active period in the smooth voltage period TPW. This active period may be equal to the smooth voltage period TPW. In this case the timing generating unit 41A outputs all commutation times as the timing signal S41A.

The amplitude/phase setting unit 42A sets the reference amplitude that varies in the smooth voltage period TPW based on the timing signal S41A. The amplitude/phase setting unit 42A multiplies this reference amplitude with the typical amplitude of the current command signal S8 to generate the current control amplitude. For example, the typical amplitude of the current command signal S8 (shown in FIG. 2 (C)) is set to the maximum in the smooth voltage period TPW. As a result, the current control amplitude is controlled by comparing the actual speed with the target speed so that the difference therebetween decreases. The amplitude/phase setting unit 42A sets the amplitude of the intermodulation wave signal S46 to this current control amplitude, and generates an amplitude/phase setting signal S42A representing the set intermodulation wave signal S46.

The amplitude of the amplitude/phase setting signal S42A typically varies substantially proportionally to the smooth voltage S3. Alternatively, the amplitude of the amplitude/phase setting signal S42A is substantially constant during the smooth voltage period TPW. In either case, the amplitude of the amplitude/phase setting signal S42A changes proportionally to the amplitude of the current command signal S8. Alternatively, the amplitude of the amplitude/phase setting signal S42A is constant and does not depend on the amplitude of the current command signal S8.

The amplitude/phase setting unit 42A sets the phase of the amplitude/phase setting signal S42A based on the timing signal S41A. How the amplitude/phase setting unit 42A sets the phase is described next with reference to FIG. 7.
The commutation signal S10A is used instead of the timing signal S41A in FIG. 7. The timing signal S41A indicates the rising edge and the falling edge of the commutation signal S10A. The active period (not shown in the figure) is in the smooth voltage period TPW of the amplitude/phase setting signal S42A outside of the period containing a sine wave based on the intermodulation wave signal S46. More specifically, the active period is shorter than the smooth voltage period TPW in FIG. 7 (A), (B), (C), (D), and (F), and is equal to the smooth voltage period TPW in FIG. 7 (E).

The interval between the rising and falling edges of the commutation signal S10A is called the commutation period. The commutation period varies with each commutation. The period of the sine wave shaped waveform in the amplitude/phase setting signal S42A is called the waveform period. Each of the amplitude/phase setting signals S42A shown in FIG. 7 (A), (B), (C), and (D) is a sine wave shaped waveform of one waveform period. The amplitude/phase setting signals S42A in FIG. 7 (E) and (F) are generated so that the sine wave shaped waveforms of two different waveform periods alternate, so that one appears more frequently, or they appear randomly.

The length of the active period to the smooth voltage period TPW and the configuration of the waveform period are set as described above in FIG. 7 (A) to (F). When the length of the waveform period relative to the commutation period, and the number N (where N is an integer of 1 or more) of waveform periods in a continuous wave, are set as described below in FIG. 7 (A) to FIG. 7 (F), the waveform of the amplitude/phase setting signal S42A will be as described below. While the intermodulation wave signal S46 is a continuous wave based on a sine wave form, the amplitude/phase setting unit 42A processes the intermodulation wave signal S46 in waveform period units based on the timing signal S41A. As a result, the amplitude/phase setting signal S42A is a non-continuous wave that includes a continuous wave with N continuous repetitions of the sine wave of the waveform period unit, and a discontinuity between the continuous waves. If N equals 1, the amplitude/phase setting signal S42A is a non-continuous wave of the waveform period unit.

FIG. 7 (A) shows the amplitude/phase setting signal S42A when the waveform period is unrelated to the length of the commutation period and N in the active period is unlimited. In this case the amplitude/phase setting signal S42A is synchronized to the timing signal S41A at the beginning of the active period, but is not synchronized during the rest of the active period. As a result, the amplitude/phase setting signal S42A is a non-continuous wave that contains a continuous wave that repeats with no limit in the active period, but is non-continuous outside the active period. As a result, the amplitude/phase setting signal S42A is synchronized with the commutation signal S10A once each smooth voltage period TPW.

FIG. 7 (B) shows the amplitude/phase setting signal S42A when the waveform period is longer than the commutation period and N = 1. In this case the amplitude/phase setting signal S42A synchronizes with the first timing signal S41A in the active period, and thereafter synchronizes with the first timing signal S41A after the waveform period following the synchronization point. As a result, the amplitude/phase setting signal S42A is a non-continuous wave that contains a continuous wave of one waveform period, is non-continuous between the continuous waves, and is non-continuous outside of the active period. The amplitude/phase setting signal S42A therefore synchronizes with the commutation signal S10A each waveform period.

FIG. 7 (C) shows the amplitude/phase setting signal S42A when the waveform period is shorter than the commutation period and N = 1. In this case the amplitude/phase setting signal S42A synchronizes with all timing signals S41A. As a result, the amplitude/phase setting signal S42A is a non-continuous wave that contains a continuous wave of one waveform period, is non-continuous between the continuous waves, and is also non-continuous outside of the active period. The amplitude/phase setting signal S42A therefore synchronizes with the commutation signal S10A each waveform period.

FIG. 7 (D) shows the amplitude/phase setting signal S42A when the waveform period is shorter than the commutation period as in FIG. 7 (C), but N = 2. In this case the amplitude/phase setting signal S42A synchronizes with the first timing signal S41A, and synchronizes with the first timing signal S41A after two waveform periods after the initial synchronization. As a result, the amplitude/phase setting signal S42A is a non-continuous wave that contains the continuous waves in two waveform periods, is non-continuous between the continuous waves, and is also non-continuous outside of the active period. The amplitude/phase setting signal S42A therefore synchronizes with the commutation signal S10A every two waveform periods.

FIG. 7 (E) shows the amplitude/phase setting signal S42A when the waveform period is unrelated to the length of the commutation period and N = 3. In this case the amplitude/phase setting signal S42A synchronizes with any selected timing signal S41A, and synchronizes with the first timing signal S41A after three waveform periods after the initial synchronization. As a result, the amplitude/phase setting signal S42A is a non-continuous wave that contains a continuous wave of three waveform periods and is non-continuous between the continuous waves with no relationship to the active period. The amplitude/phase setting signal S42A therefore has two mutually different waveform periods, and synchronizes with the commutation signal S10A in each of the different waveform periods.

FIG. 7 (F) shows the amplitude/phase setting signal S42A when the waveform period is unrelated to the length of the commutation period and N = 1. In this case the amplitude/phase setting signal S42A synchronizes with the first timing signal S41A in the active period, and synchronizes with the first timing signal S41A following the waveform period after the initial synchronization. As a result, the amplitude/phase setting signal S42A is a non-continuous wave that contains a continuous wave with one waveform period, is non-continuous between the continuous waves, and is non-continuous outside the active period. This continuous wave also has two mutually different waveform periods. The amplitude/phase setting signal S42A therefore has two mutually different waveform periods, and synchronizes with the commutation signal S10A in each waveform period.

The waveform period of the amplitude/phase setting signal S42A is selected to include one or more periods of frequencies set at 100 Hz intervals from 1050 Hz, such as the 850 Hz, 950 Hz, 1050 Hz, 1150 Hz, or 1250 Hz that is the frequency of the intermodulation wave signal S46 as described above. FIG. 7 (E) and FIG. 7 (F) show the signals for two different waveform periods, but the same description applies when there are three or more mutually different waveform periods. Note also that in FIG. 7 one continuous wave may contain one frequency or two or more frequencies selected from the range of frequencies at 100 Hz intervals from 1050 Hz, for example.

The phase at which the amplitude/phase setting signal S42A synchronizes with the commutation signal S10A is set to 0 degrees in the sine waves shown in FIG. 7, but the invention is not so limited.

As described above, the amplitude/phase setting unit 42A generates the amplitude/phase setting signal S42A based on any one or a combination of at least two of the six phase synchronization arrangements shown in FIG. 7 (A) to FIG. 7 (F).

The control unit 43, switching unit 44, and signal smoothing unit 45 are the same as in the current command correction unit 13, and further description thereof is omitted.

In another aspect of the invention the intermodulation wave generating unit 46 shown in FIG. 4A is omitted. The frequency of the amplitude/phase setting signal S42A is preset to a predetermined value substantially equal to the intermodulation distortion in the amplitude/phase setting unit 42A.

As described above, the waveform of the current detection signal S6 containing waveform distortion (see FIG. 2 (B)) results from amplitude modulation of the carrier wave signal having an electrical angle frequency containing sixth-order harmonic distortion using the smooth voltage S3 (see FIG. 2 (A)) containing harmonic distortion. Because the sixth-order harmonic distortion of the carrier signal is also amplitude modulated by the smooth voltage S3 containing harmonic distortion, the sixth-order harmonic distortion of the electrical angle frequency and intermodulation distortion are also contained in the waveform distortion of the current detection signal S6. This intermodulation distortion is distortion with a frequency equal to the difference between the frequency of the sixth harmonic of the electrical angle frequency and the sum of the smooth voltage frequency and the harmonic frequency.

The sixth-order harmonic distortion of the electrical angle frequency in the waveform distortion of the current detection signal S6 is corrected by the current command correction unit 13, but intermodulation distortion between the sixth-order harmonic distortion and the smooth voltage frequency and a harmonic frequency thereof is corrected by the current command correction unit 14.

In other words, the current command correction unit 14 generates a current command correction signal S14 with a frequency equal to or substantially equal to the frequency of the intermodulation wave signal S46. The amplitude of this current command correction signal S14 is substantially proportional to the amplitude of the smooth voltage S3, and can vary. The amplitude of the current command correction signal S14 also changes proportionally to the typical amplitude of the current command signal S8, and is controlled so that the difference between the actual speed and the target speed decreases.

As shown in FIG. 7, the phase of the current command correction signal S14 is synchronized to the commutation signal S10A, which denotes the commutation timing of the motor current. Because the sixth-order harmonic distortion in the current detection signal S6 is caused by commutating six times in the electrical angle period TEA, intermodulation distortion related to the sixth-order harmonic distortion of the current detection signal S6 can be effectively reduced by synchronizing to the commutation timing.

The phase of the current command correction signal S14 is also first adjusted by the amplitude/phase setting unit 42A to reduce waveform distortion of the current detection signal S6, smooth voltage S3, or AC current SC. The phase of the current command correction signal S14 after adjustment is substantially inverse phase to the phase of the intermodulation wave contained in the current detection signal S6. The phase of the intermodulation wave is in a specific phase relationship to the rotational phase signal S7, and because the amplitude/phase setting unit 42A operates based on the rotational phase signal S7, this inverse phase relationship can be maintained even if the adjustment value is fixed after the amplitude/phase setting unit 42A first adjusts the phase.

### Configuration and operation of the adder 17 and voltage command generating unit 9

The adder 17 adds the current command correction signal S13, which represents the sixth-order harmonic distortion of substantially inverse to the waveform distortion of the current detection signal S6, and the current command correction signal S14, which denotes intermodulation distortion related to the sixth-order harmonic distortion, to the current command signal S8, which does not contain any waveform distortion, to generate the sum signal S17.

The configuration and operation of the voltage command generating unit 9 in the first embodiment of the invention is described next.

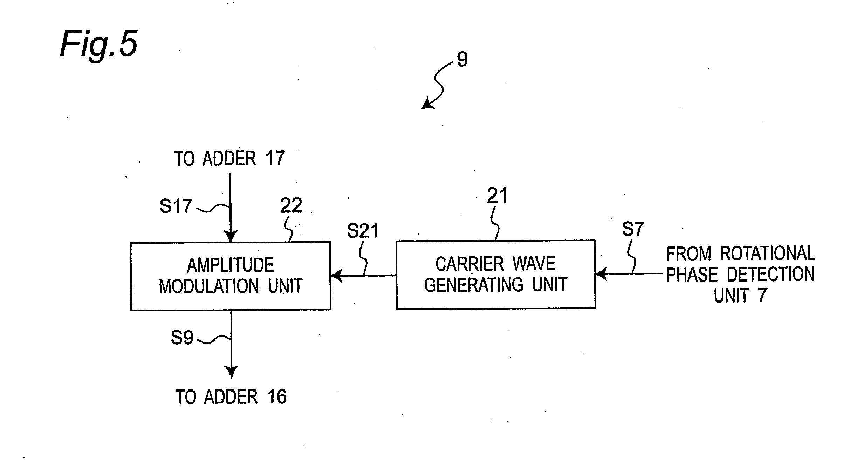

FIG. 5 is a detailed block diagram showing the configuration of the voltage command generating unit 9 in the first embodiment of the invention. The voltage command generating unit 9 includes a carrier wave generating unit 21 and an amplitude modulation unit 22.

The carrier wave generating unit 21 generates a carrier wave signal S21, which is a sine wave signal of electrical angle period TEA, based on the rotational phase signal S7. The amplitude modulation unit 22 generates the voltage command signal S9 by amplitude modulating the carrier wave signal S21 using the to-be-modulated signal denoted by the sum signal S17. The carrier wave generating unit 21 detects only the time of the rotational phase signal S7 at each electrical angle period TEA, and does not detect the carrier distortion of the current detection signal S6 in the rotational phase signal S7. As a result, the carrier wave generating unit 21 does not impart the waveform distortion of the rotational phase signal S7 on the carrier wave signal S21. The amplitude modulation unit 22 generates the voltage command signal S9 based on the current command signal S8 containing no waveform distortion and the sum signal S17 containing waveform distortion. The voltage command signal S9 therefore contains the waveform distortion of the current command correction signal S13 and current command correction signal S14.

The sixth-order harmonic distortion contained in the current detection signal S6 and the intermodulation distortion related to the sixth-order harmonic distortion appear mainly as the fifth-order harmonic distortion of the electrical angle frequency and as intermodulation distortion related to the fifth-order harmonic distortion in the smooth voltage S3. This distortion in the smooth voltage S3 produces harmonic distortion in the AC current SC flowing to the AC power supply 1. By reducing the distortion described above in the smooth voltage S3, waveform distortion of the current detection signal S6 and harmonic distortion of the AC current SC are also reduced.

Because the sum signal S17 contains sixth-order harmonic distortion and intermodulation distortion related to the sixth-order harmonic distortion, the sixth harmonic must be converted to the fifth harmonic in order to correct for the fifth-order harmonic distortion of the electrical angle frequency and intermodulation distortion related to the fifth-order harmonic distortion in the smooth voltage S3.
The amplitude modulation unit 22 amplitude modulates the electrical angle frequency carrier wave signal S21 by the sum signal S17 containing sixth-order harmonic distortion and intermodulation distortion related to the sixth-order harmonic distortion to generate a signal containing the fifth-order harmonic distortion and intermodulation distortion related to the fifth-order harmonic distortion and seventh-order harmonic distortion and intermodulation distortion related to the seventh-order harmonic distortion. The amplitude modulation unit 22 extracts the fifth-order harmonic distortion and intermodulation distortion related to the fifth-order harmonic distortion, combines the carrier wave signal S21 with the signal amplitude modulated with the current command signal S8, and outputs the voltage command signal S9.

In the example described above the electrical angle frequency is 175 Hz and the smooth voltage is 100 Hz, and the fifth-order harmonic distortion is therefore a frequency of 875 Hz and the intermodulation distortion related to the fifth-order harmonic distortion is a frequency at a 100 Hz increment from 875 Hz, such as 675 Hz, 775 Hz, 875 Hz, 975 Hz, or 1075 Hz.

The envelope of the voltage command signal S9 represents the sum signal S17. The size of the envelope is controlled by comparing the actual speed and the target speed so that the difference therebetween decreases. More specifically, the voltage command signal S9 has a waveform substantially identical to the current detection signal S6 shown in FIG. 3 (A) when observed on the smooth voltage period TPW scale.

The voltage command signal S9 is described as containing fifth-order harmonic distortion and intermodulation distortion related to the fifth-order harmonic distortion, but the invention is not so limited and may be a periodic signal containing seventh-order harmonic distortion and intermodulation distortion related to the seventh-order harmonic distortion, for example, instead of the fifth harmonic.

### Configuration and operation of the voltage command compensation unit 11

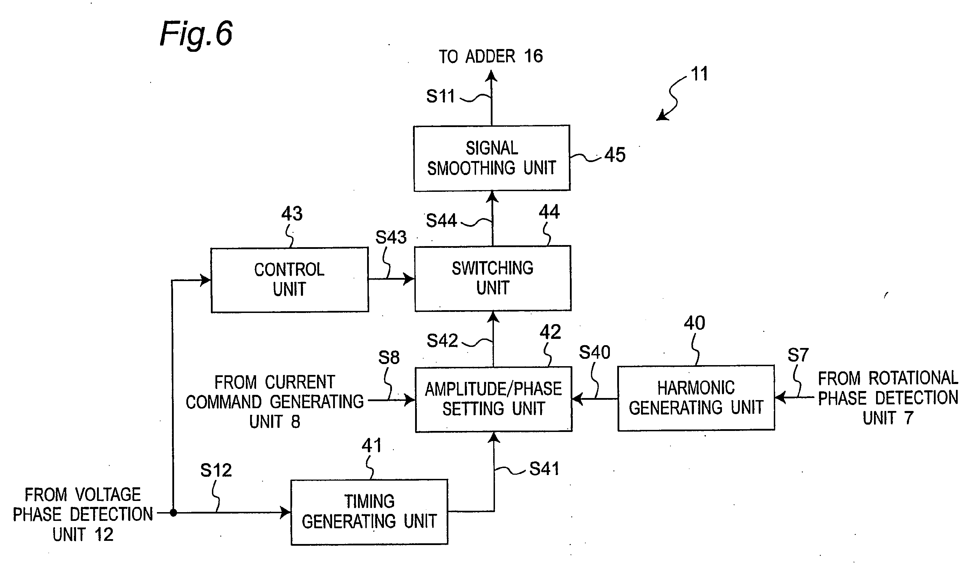

The configuration and operation of the voltage command correction unit 11 in the first embodiment of the invention are described next. FIG. 6 is a detailed block diagram showing the configuration of the voltage command correction unit 11 in the first embodiment of the invention. This voltage command correction unit 11 includes a harmonic generating unit 40, a timing generating unit 41, an amplitude/phase setting unit 42, a control unit 43, a switching unit 44, and a signal smoothing unit 45.

The harmonic generating unit 40 generates a harmonic signal S40 denoting the fifth harmonic of the electrical angle frequency based on the rotational phase signal S7. Because the electrical angle frequency is 175 Hz in the above example, the frequency of the harmonic signal S40 is 875 Hz.

The configuration, operation, and effect of the timing generating unit 41, amplitude/phase setting unit 42, control unit 43, switching unit 44, and signal smoothing unit 45 are the same as the current command correction unit 13 described above, and further description thereof is thus omitted.

Thus comprised, the voltage command compensation unit 11 generates a voltage command correction signal S11 with a frequency substantially equal to the fifth-order harmonic distortion. The amplitude of the voltage command correction signal S11 is substantially constant in each secondary smooth voltage period, and can vary substantially proportionally to the amplitude of the smooth voltage S3, for example, each time the secondary smooth voltage period changes in the smooth voltage period TPW.
In addition, the amplitude of the voltage command correction signal S11 in each secondary smooth voltage period changes proportionally to the typical amplitude of the current command signal S8, and is controlled so that the difference between the actual speed and the target speed decreases. As a result, the amplitude of the voltage command correction signal S11 can be made substantially equal to the amplitude of the sixth harmonic in the current detection signal S6 as described in the first embodiment.

The amplitude/phase setting unit 42 also first adjusts the phase of the voltage command correction signal S11 in each secondary smooth voltage period so that waveform distortion is reduced in the current detection signal S6, the smooth voltage S3, and the AC current SC. If the phase of the voltage command correction signal S11 also varies in each secondary smooth voltage period, waveform distortion in the AC current SC described above may also decrease. The phase of the voltage command correction signal S11 after adjustment is substantially the inverse of the phase of the sixth harmonic contained in the current detection signal S6. Because the phase of the sixth harmonic is in a specific relationship to the rotational phase signal S7 and the amplitude/phase setting unit 42 operates on the rotational phase signal S7, if the amplitude/phase setting unit 42 first adjusts the phase, this inverse phase relationship can be maintained even if the adjusted phase is then fixed.

The sixth-order harmonic distortion off the current detection signal S6 may also appear in the smooth voltage S3 as primarily the fifth-order harmonic distortion of the electrical angle frequency. Waveform distortion appears in the smooth voltage S3 as primarily distortion of the fifth harmonic of the electrical angle frequency. This fifth-order harmonic distortion of the electrical angle frequency in the smooth voltage S3 produces harmonic distortion in the AC current SC flowing to the AC power supply 1. If the fifth-order harmonic distortion of the electrical angle frequency in the smooth voltage S3 is reduced, waveform distortion in the current detection signal S6 and harmonic distortion of the AC current SC can also be reduced. The voltage command correction signal S11 reduces this fifth-order harmonic distortion.

This sixth-order harmonic distortion of the current detection signal S6 is corrected by the current command correction unit 13 and not only the voltage command compensation unit 11. If both the current command correction unit 13 and voltage command compensation unit 11 are disposed as in the first embodiment shown in FIG. 1, the sixth-order harmonic distortion of the current detection signal S6 is optimally adjusted by both to decrease. As a result, the sixth-order harmonic distortion of thee current detection signal S6 can be handled as the sum of distortion that is easily corrected by the current command correction signal S13 and distortion that is easily corrected by the voltage command correction signal S11, and can be effectively and separately reduced by both. If only the current command correction unit 13 is used, the current command correction unit 13 can be configured to independently optimally adjust and thereby reduce the sixth-order harmonic distortion of the current detection signal S6 using only the current command correction signal S13.

FIG. 3 (E) shows an example of the voltage command correction signal S11 waveform. The voltage command correction signal S11 contains five periods of the fifth harmonic in the electrical angle period TEA.

FIG. 8 (E) shows the waveform of the voltage command correction signal S11 relative to the smooth voltage S3. The voltage command correction signal S11 shown in FIG. 8 (E) contains five periods of the fifth harmonic in the electrical angle period TEA. The amplitude and phase of the voltage command correction signal S11 change in each of the secondary smooth voltage periods TD1, TD2, TD3 in the smooth voltage period TPW. The timing when the voltage command correction signal S11 level is greatest is not necessarily coincident to the timing when the smooth voltage S3 peaks, and is offset slightly.

The current command correction signal S13 containing the sixth-order harmonic distortion is generated by the current command correction unit 13, and operates as shown in FIG. 10, FIG. 11, and FIG. 12. The voltage command correction signal S11 containing fifth-order harmonic distortion is also generated by the voltage command compensation unit 11, and operates as shown in FIG. 10, FIG. 11, and FIG. 12. Operation of the voltage command correction signal S11 is the same as the current command correction signal S13, and further description thereof is omitted.

The harmonic signal S40 is described above as denoting the fifth harmonic of the electrical angle frequency, but the invention is not so limited and the harmonic signal S40 may be a periodic signal containing a harmonic other than the fifth.

In the first embodiment of the invention the voltage command correction unit 11 generates the voltage command correction signal S11 based on the voltage phase signal S12, the rotational phase signal S7, and the current command signal S8, but can operate in the same way using the current detection signal S6 instead of the current command signal S8. In this case the current detection signal S6 is input instead of the current command signal S8 to the voltage command correction unit 11 in the configuration shown in FIG. 1, and the current detection signal S6 is input instead of the current command signal S8 to the amplitude/phase setting unit 42 in the configurations shown in FIG. 6.

### Configuration and operation of the adder 16, PWM signal generator 10, and DC/AC converter 4

The adder 16 adds the voltage command signal S9 containing fifth-order harmonic distortion and intermodulation distortion related to the fifth-order harmonic distortion and the voltage command correction signal S11 likewise containing fifth-order harmonic distortion, and outputs the sum signal S16.
Based on the sum signal S16, the PWM signal generator 10 generates a PWM signal S10 containing waveform distortion that is opposite phase to the current detection signal S6.
Based on the PWM signal S10, the DC/AC converter 4 generates a drive voltage S4 containing waveform distortion that is opposite phase to the current detection signal S6.
The waveform distortion of the current detection signal S6 is reduced by using the drive voltage S4 containing waveform distortion that is opposite phase to the current detection signal S6 to drive the motor 5.
In addition, by feeding the current command signal S8 denoting the result of comparing the actual speed with the target speed back through the voltage command generating unit 9, PWM signal generator 10, and DC/AC converter 4 to generate the drive voltage S4, the actual speed of the motor 5 is controlled to further approach the target speed.

As described above, the amplitude of waveform distortion in the current detection signal S6 is substantially proportional to the amplitude of the smooth voltage S3. The configuration of the current command correction unit 13, current command correction unit 14, and voltage command compensation unit 11 produces a sum signal S16 that contains waveform distortion that is inverse phase and substantially equal amplitude to the waveform distortion of the current detection signal S6. As a result, the drive voltage S3 based on the sum signal S16 can effectively reduce waveform distortion in the current detection signal S6, which is substantially proportional to the smooth voltage S3.

### Summary of the first embodiment

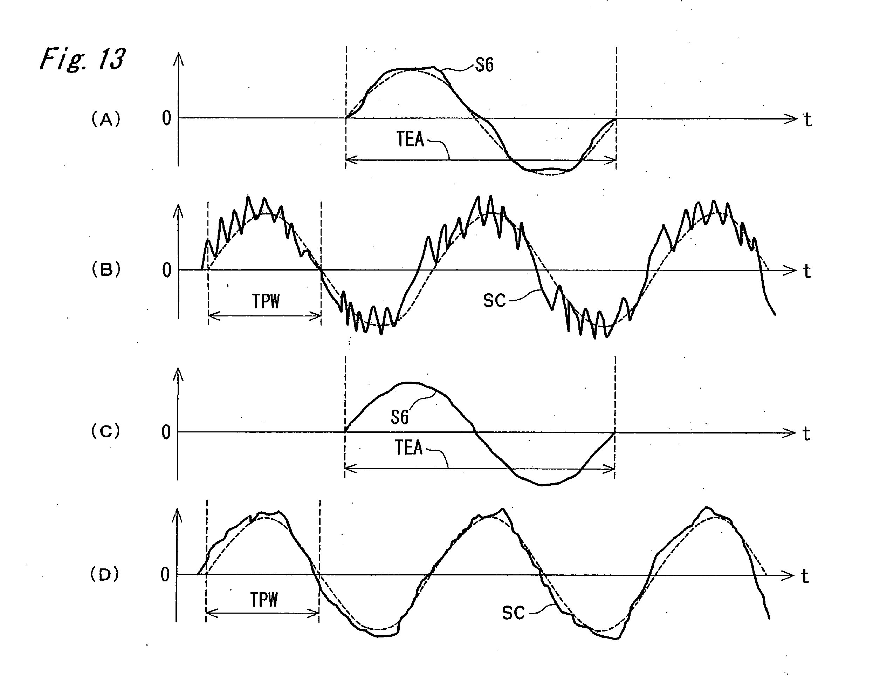

FIG. 13 (A) and FIG. 13 (B) show the current detection signal S6 and AC current SC, respectively, when the current command correction unit 13, current command correction unit 14, and voltage command compensation unit 11 do not operate. FIG. 13 (C) and FIG. 13 (D) respectively show the current detection signal S6 and AC current SC when the current command correction unit 13, current command correction unit 14, and voltage command compensation unit 11 operate. Similarly to the relationship between FIG. 3 (A) and FIG. 3 (B), FIG. 13 (A) and FIG. 13 (C) show the signals in FIG. 13 (B) and FIG. 13 (D), respectively, on a longer time base denoted by electrical angle period TEA and smooth voltage period TPW.

In FIG. 13 (A) if the current detection signal S6 contains harmonic distortion as indicated by comparison with the distortion-free waveform denoted by the dotted line, this waveform distortion is propagated through the smoothing unit 3 and rectification unit 2 and affects the AC current SC. As a result, the AC current SC as shown in FIG. 13 (B) becomes a waveform with an increased harmonic component and deviates from the distortion-free waveform denoted by the dotted line. When the current command correction unit 13, current command correction unit 14, and voltage command correction unit 11 operate, waveform distortion in the current detection signal S6 is reduced as shown in FIG. 13 (C), and harmonic distortion in the AC current SC is therefore also reduced as shown in FIG. 13 (D).

This first embodiment of the invention thus generates a current command correction signal S13 containing sixth-order harmonic distortion, a current command correction signal S14 containing intermodulation distortion related to the sixth-order harmonic distortion, and a voltage command correction signal S11 containing fifth-order harmonic distortion.
The waveform distortion contained in the current detection signal S6 is handled as the sum of sixth-order harmonic distortion that can be easily corrected by the current command correction unit 13, sixth-order harmonic distortion that can be easily corrected by the voltage command correction signal S11, and intermodulation distortion related to the sixth-order harmonic distortion.
The current command correction signal S13, current command correction signal S14, and voltage command correction signal S11 are substantially inverse phase to the waveform distortion contained in the current detection signal S6, and proportional to the amplitude of the smooth voltage S3.
By reflecting the current command correction signal S13, current command correction signal S14, and voltage command correction signal S11 in the drive voltage S4 through the PWM signal S10, waveform distortion in the current detection signal S6 can be distributively reduced. As a result, current distortion flowing to the motor 5 can be suppressed while reducing the capacity of the smoothing capacitor and using a smoothing unit 3 that generates a smooth voltage S3 that pulsates greatly. By thus reducing harmonics in the AC current SC and preventing contamination of the commercial power supply, power supply efficiency is improved not only in the inverter device according to this first embodiment of the invention but also in other electrical devices connected to the same power supply system.

Furthermore, because the physical size of the smoothing capacitor can be reduced, the inverter device can also be reduced in size and weight, and the size and weight of the air conditioner in which the inverter device is used can also be easily reduced. The cost of the inverter device and air conditioner can also be reduced by making the smoothing capacitor, inverter device, and air conditioner smaller. Eliminating the need for a PFC circuit also contributes to reducing the cost of the inverter device and air conditioner.
In addition, because a film capacitor can be used for the smoothing capacitor, the service life of the smoothing capacitor can be increased and the operating temperature range of the air conditioner can be increased. The air conditioner can also be made quieter by reducing waveform distortion in the motor current.
The inverter device of this first embodiment of the invention is not limited to use in air conditioners, and can be used in any electrical device that uses an inverter device.

This first embodiment of the invention produces reference waveform distortion based on the rotational phase signal S7, corrects the reference waveform distortion based on the current command signal S8 and voltage phase signal S12, and thus generates the current command correction signal S13, current command correction signal S14, and voltage command correction signal S11. This first embodiment of the invention thus has fewer elements that are corrected automatically using the motor 5 detection signal, and makes the correction operation more robust and resistant to a drop in the smooth voltage S3 or an increase in waveform distortion. In addition, as described above, randomly setting the pass period and no-pass period and randomly setting the start and end times of the pass period affords even greater resistance to disruptions.

In FIG. 1 the current command generating unit 8, the current command correction unit 13, the current command correction unit 14, the voltage command generating unit 9, and the voltage command correction unit 11 operate based on the rotational phase signal S7, but could operate based on the current detection signal S6 instead of the rotational phase signal S7 because the rotational phase signal S7 is derived from the current detection signal S6.
More specifically, the current command generating unit 8 could generate the current command signal S8 based on the current detection signal S6, the voltage phase signal S12, and the target speed signal S15.
The current command correction unit 13 could generate the current command correction signal S13 based on the voltage phase signal S12, current detection signal S6, and current command signal S8.
The current command correction unit 14 could generate the current command correction signal S14 based on the voltage phase signal S12, the current detection signal S6, the current command signal S8, and the commutation signal S10A.
The voltage command generating unit 9 could generate the voltage command signal S9 based on the current detection signal S6 and the sum signal S17.
The voltage command correction unit 11 then generates the voltage command correction signal S11 based on the voltage phase signal S12, the current detection signal S6, and the current command signal S8.

In addition, the current command generating unit 8, the current command correction unit 13, the current command correction unit 14, and the voltage command compensation unit 11 operate based on the voltage phase signal S12, but could operate using the current detection signal S6 instead of the voltage phase signal S12 because the smooth voltage period TPW is generated from the envelope of the current detection signal S6.
More particularly, the current command generating unit 8 could generate the current command signal S8 based on the current detection signal S6 and the target speed signal S15. The current command correction unit 13 then generates the current command correction signal S13 based on the current detection signal S6 and the current command signal S8. The current command correction unit 14 generates the current command correction signal S14 based on the current detection signal S6, current command signal S8, and commutation signal S10A. The voltage command correction unit 11 can then generate the voltage command correction signal S11 based on the current detection signal S6 and the current command signal S8.

Furthermore, the current command correction unit 13, current command correction unit 14, and voltage command compensation unit 11 operate based on the current command signal S8, but could operate based on the current detection signal S6 and target speed signal S15 instead of the current command signal S8 because the current command generating unit 8 generates the current command signal S8 based on the current detection signal S6 and target speed signal S15.
More specifically, the current command correction unit 13 could generate the current command correction signal S13 based on the current detection signal S6 and target speed signal S15.
The current command correction unit 14 could generate the current command correction signal S14 based on the current detection signal S6, target speed signal S15, and commutation signal S10A.
The voltage command generating unit 9 could generate the voltage command signal S9 based on the current detection signal S6 and target speed signal S15.
The voltage command compensation unit 11 could generate the voltage command correction signal S11 based on the current detection signal S6 and target speed signal S15.

The invention can be used in inverter devices and air conditioners.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims.

## Claims

1. An inverter device comprising:
a rectification means (2) that rectifies an AC voltage from an AC power supply (1) and generates a rectified voltage;
a smoothing means (3) that smoothes the rectified voltage and generates a smooth voltage containing the waveform of a smooth voltage period corresponding to half the AC voltage period;
a DC/AC conversion means (4) that converts the smooth voltage to a drive voltage representing a pulse-width modulated alternating current, and supplies the drive voltage to a motor (5);
a current detection means (6, 18) that detects the motor current flowing to the motor as a result of the drive voltage, the motor current containing the waveform of the smooth voltage period and a first and fourth waveform distortion, and generates a current detection signal;
a target speed setting means (15) that generates a target speed signal representing the target speed of the motor;
a current command generating means (8) that generates a current command signal representing a motor current control value based on the current detection signal and target speed signal;
a first current command correction means (13) that generates a first current command correction signal correcting the first waveform distortion based on the current detection signal and current command signal (S13);
a voltage command output means (9, 17) that generates and outputs a voltage command signal (S17) based on the current detection signal, current command signal, and first current command correction signal;
a pulse width modulation signal generating means (10) that generates the pulse width modulation signal (S10) based on the voltage command signal;
a voltage command correction means (11) that generates a voltage command correction signal correcting the fourth waveform distortion based on the current detection signal and target speed signal; and
a to-be-modulated signal generating means (16) that adds the voltage command signal and the voltage command correction signal, and outputs the resulting sum signal as the to-be-modulated signal;
wherein:
said pulse width modulation signal generating means (10) generates the pulse width modulation signal (S10) based on the to-be-modulated signal (S16), and
wherein said DC/AC conversion means (4) generates the drive voltage based on the pulse width modulation signal (S10),
said voltage command correction means (11)
includes a control unit (43) that generates a correction period signal representing either a correction period of zero length or a correction period of non-zero length in each smooth voltage period; and
generates a voltage command correction signal when the correction period signal is in the non-zero correction period; and
the control unit (43) sets at least one of the start and end points in the non-zero correction period to a desired time in each smooth voltage period.

2. The inverter device described in claim 1, wherein:
said current detection means (6) detects a motor current containing a second waveform distortion and a third waveform distortion;
said pulse width modulation signal generating means (10) generates a commutation signal indicating the commutation timing of the motor current; and
said first current command correction means (13) includes
a second current command correction means that generates a second current command correction signal correcting the second waveform distortion based on the current detection signal and current command signal, and
a third current command correction means that generates a third current command correction signal correcting the third waveform distortion based on the current detection signal, current command signal, and commutation signal.

3. The inverter device described in claim 1, further comprising:
a rotational phase detection means (7) that detects a rotational phase signal representing the rotational phase of the motor (5) based on the current detection signal (S6);
wherein said voltage command correction means (11) generates a voltage command correction signal (S11) based on the rotational phase signal (S7) and current command signal (S8).

4. The inverter device described in claim 1, further comprising:
a voltage phase detection means (12) that detects a voltage phase signal (S12) representing the phase of the smooth voltage;
wherein said voltage command correction means (11) generates the voltage command correction signal (S11) based on the voltage phase signal (S12).

5. The inverter device described in claim 1, wherein:
said voltage command correction means (11) changes at least one of the amplitude and phase of the voltage command correction signal (S11).

6. The inverter device described in claim 1, further comprising:
a rotational phase detection means (7) that detects a rotational phase signal (S7) representing the rotational phase of the motor (5) based on the current detection signal (S6);
wherein said current command generating means (8) generates a current command signal (S8) based on the rotational phase signal and the target speed signal,
said first current command correction means (13) generates the first current command signal based on the rotational phase signal (S7) and the current command signal, and
said voltage command output means (9, 17) outputs the voltage command signal based on the rotational phase signal (S7), current command signal, and first current command correction signal.

7. The inverter device described in claim 1, wherein:
said voltage command output means (9, 17) includes
a sum signal generating unit (17) that adds the first current command correction signal to the current command signal and generates the sum signal, and
a voltage command generating means (9) that generates a voltage command signal (S9) based on the current detection signal and the sum signal.

8. The inverter device described in claim 1, further comprising:
a voltage phase detection means (12) that detects a voltage phase signal (S12) representing the phase of the smooth voltage.

9. The inverter device described in claim 8, wherein:
said current command generating means (8) generates the current command signal based on the voltage phase signal (S12).

10. The inverter device described in claim 8, wherein
said first current command correction means (13) generates the first current command correction signal based on the voltage phase signal (S12).

11. The inverter device described in claim 1, wherein
said first current command correction means (13)
includes a control unit (43) that generates a correction period signal representing either a correction period of zero length or a correction period of non-zero length in each smooth voltage period; and
generates a first current command correction signal when the correction period signal is in the non-zero correction period; and
the control unit (43) sets at least one of the start and end points in the non-zero correction period to a desired time in each smooth voltage period.

12. The inverter device described in claim 1, wherein said first current command correction means (13) changes at least one of the amplitude and phase of the first current command correction signal.

13. The inverter device described in claim 1, wherein:
said smoothing means includes a smoothing capacitor and a reactor; and
the resonance frequency of the smoothing capacitor and reactor is at least forty times the frequency of the AC power supply (1).

14. The inverter device described in claim 13, wherein the smoothing capacitor is a film capacitor.

15. An air conditioner comprising:
the inverter device described in claim 1; and
a compressor including a motor (5).

## Patentansprüche

1. Umrichtervorrichtung, enthaltend:
ein Gleichrichtungsmittel (2), das eine Wechselspannung von einer Wechselstromquelle (1) gleichrichtet und eine gleichgerichtete Spannung erzeugt;
ein Glättungsmittel (3), das die gleichgerichtete Spannung glättet und eine glatte Spannung erzeugt, die die Wellenform einer Glattspannungsperiode enthält, die einer Hälfte der Wechselspannungsperiode entspricht;
ein Gleichstrom/Wechselstrom-Wandlungsmittel (4), das die glatte Spannung in eine Ansteuerspannung wandelt, die einen impulsbreitenmodulierten Wechselstrom repräsentiert, und die Ansteuerspannung einem Motor (5) zuführt;
ein Stromerfassungsmittel (6, 18), das den infolge der Ansteuerspannung zu dem Motor fließenden Motorstrom erfasst, wobei der Motorstrom die Wellenform der Glattspannungsperiode und eine erste und eine vierte Wellenformverzerrung enthält, und ein Stromerfassungssignal erzeugt;
ein Solldrehzahl-Einstellmittel (15), das ein Solldrehzahlsignal erzeugt, das die Solldrehzahl des Motors repräsentiert;
ein Strombefehlserzeugungsmittel (8), das ein Strombefehlssignal, das einen Motorstromsteuerwert darstellt, auf der Grundlage des Stromerfassungssignals und des Solldrehzahlsignals erzeugt;
ein erstes Strombefehlskorrekturmittel (13), das ein erstes Strombefehlskorrektursignal, welches die erste Wellenformverzerrung korrigiert, auf der Grundlage des Stromerfassungssignals und des Strombefehlssignals erzeugt (S13);
ein Spannungsbefehlsausgabemittel (9, 17), das ein Spannungsbefehlssignal (S17) auf der Grundlage des Stromerfassungssignals, des Strombefehlssignals und des ersten Strombefehlskorrektursignals erzeugt und ausgibt;
ein Impulsbreitenmodulationssignal-Erzeugungsmittel (10), das das Impulsbreitenmodulationssignal (S10) auf der Grundlage des Spannungsbefehlssignals erzeugt;
ein Spannungsbefehlskorrekturmittel (11), das ein Spannungsbefehlskorrektursignal, das die vierte Wellenformverzerrung korrigiert, auf der Grundlage des Stromerfassungssignals und des Solldrehzahlsignals erzeugt; und
ein Erzeugungsmittel (16) für ein zu modulierendes Signal, das das Spannungsbefehlssignal und das Spannungsbefehlskorrektursignal addiert und das resultierende Summensignal als das zu modulierende Signal ausgibt;
wobei:
das Impulsbreitenmodulationssignal-Erzeugungsmittel (10) das Impulsbreitenmodulationssignal (S10) auf der Grundlage des zu modulierenden Signals (S16) erzeugt, und
wobei das Gleichstrom/Wechselstrom-Wandlungsmittel (14) die Ansteuerspannung auf der Grundlage des Impulsbreitenmodulationssignals (S10),
das Spannungsbefehlskorrekturmittel (11)
eine Steuereinheit (43) enthält, die ein Korrekturperiodensignal erzeugt, das entweder eine Korrekturperiode der Länge Null oder eine Korrekturperiode der Länge ungleich Null in jeder Glattspannungsperiode erzeugt; und
ein Spannungsbefehlskorrektursignal erzeugt, wenn sich das Korrekturperiodensignal in der Nicht-Null-Korrekturperiode befindet; und
die Steuereinheit (43) wenigstens einen der Start- und Endpunkte in der Nicht-Null-Korrekturperiode auf einen gewünschten Zeitpunkt in jeder Glattspannungsperiode setzt.

2. Umrichtervorrichtung nach Anspruch 1, wobei:
das Stromerfassungsmittel (6) einen Motorstrom erfasst, der eine zweite Wellenformverzerrung und eine dritte Wellenformverzerrung aufweist;
das Impulsbreitenmodulationssignal-Erzeugungsmittel (10) ein Kommutationssignal erzeugt, das den Kommutationszeitablauf des Motorstroms angibt; und
das erste Strombefehlskorrekturmittel (13) enthält:
ein zweites Strombefehlskorrekturmittel, das ein zweites Strombefehlskorrektursignal, das die zweite Wellenformverzerrung korrigiert, auf der Grundlage des Stromerfassungssignals und des Strombefehlssignals erzeugt, und
ein drittes Strombefehlskorrekturmittel, das ein drittes Strombefehlskorrektursignal, das die dritte Wellenformverzerrung korrigiert, auf der Grundlage des Stromerfassungssignals, des Strombefehlssignals und des Kommutationssignals erzeugt.

3. Umrichtervorrichtung nach Anspruch 1, ferner enthaltend:
ein Rotationsphasenerfassungsmittel (7), das ein Rotationsphasensignal, das die Rotationsphase des Motors (5) darstellt, auf der Grundlage des Stromerfassungssignals (S6) erfasst;
wobei das Spannungsbefehlskorrekturmittel (11) ein Spannungsbefehlskorrektursignal (S11) auf der Grundlage des Rotationsphasensignals (S7) und des Strombefehlssignals (S8) erzeugt.

4. Umrichtervorrichtung nach Anspruch 1, ferner enthaltend:
ein Spannungsphasenerfassungsmittel (12), das ein Spannungsphasensignal (S12) erfasst, das die Phase der glatten Spannung repräsentiert;
wobei das Spannungsbefehlskorrekturmittel (11) das Spannungsbefehlskorrektursignal (S11) auf der Grundlage des Spannungsphasensignals (S12) erzeugt.

5. Umrichtervorrichtung nach Anspruch 1, wobei:
das Spannungsbefehlskorrekturmittel (11) wenigstens die Amplitude und/oder die Phase des Spannungsbefehlskorrektursignals (S11) ändert.

6. Umrichtervorrichtung nach Anspruch 1, ferner enthaltend:
ein Rotationsphasenerfassungsmittel (7), das ein Rotationsphasensignal (S7), das die Rotationsphase des Motors (5) darstellt, auf der Grundlage des Stromerfassungssignals (S6) erfasst;
wobei das Strombefehlserzeugungsmittel (8) ein Strombefehlssignal (S8) auf der Grundlage des Rotationsphasensignals und des Solldrehzahlsignals erzeugt,
das erste Strombefehlskorrekturmittel (13) das erste Strombefehlssignal auf der Grundlage des Rotationsphasensignals (S7) und des Strombefehlssignals erzeugt, und
das Spannungsbefehlsausgabemittel (9, 17) das Spannungsbefehlssignal auf der Grundlage des Rotationsphasensignals (7), des Strombefehlssignals und des ersten Strombefehlskorrektursignals ausgibt.

7. Umrichtervorrichtung nach Anspruch 1, wobei:
das Spannungsbefehlsausgabemittel (9, 17) enthält:
eine Summensignalerzeugungseinheit (17), die das erste Strombefehlskorrektursignal zu dem Strombefehlssignal addiert und das Summensignal erzeugt, und
ein Spannungsbefehlserzeugungsmittel (9), das ein Spannungsbefehlssignal (S9) auf der Grundlage des Stromerfassungssignals und des Summensignals erzeugt.

8. Umrichtervorrichtung nach Anspruch 1, ferner enthaltend:
ein Spannungsphasendetektionsmittel (12), das ein Spannungsphasensignal (S12) erfasst, das die Phase der glatten Spannung darrstellt.

9. Umrichtervorrichtung nach Anspruch 8, wobei:
das Strombefehlserzeugungsmittel (8) das Strombefehlssignal auf der Grundlage des Spannungsphasensignals (S12) erzeugt.

10. Umrichtervorrichtung nach Anspruch 8, wobei:
das erste Strombefehlskorrekturmittel (13) das erste Strombefehlskorrektursignal auf der Grundlage des Spannungsphasensignals (S12).

11. Umrichtervorrichtung nach Anspruch 1, wobei
das erste Strombefehlskorrekturmittel (13)
eine Steuereinheit (43) enthält, die ein Korrekturperiodensignal erzeugt, das entweder eine Korrekturperiode der Länge Null oder eine Korrekturperiode der Länge ungleich Null in jeder Glattspannungsperiode erzeugt; und
ein erstes Strombefehlskorrektursignal erzeugt, wenn sich das Korrekturperiodensignal in der Nicht-Null-Korrekturperiode befindet; und
die Steuereinheit (43) wenigstens einen der Start- und Endpunkte in der Nicht-Null-Korrekturperiode auf einen gewünschten Zeitpunkt in jeder Glattspannungsperiode setzt.

12. Umrichtervorrichtung nach Anspruch 1, wobei das erste Strombefehlskorrekturmittel (13) wenigstens die Amplitude und/oder die Phase des ersten Strombefehlskorrektursignals ändert.

13. Umrichtervorrichtung nach Anspruch 1, wobei:
das Glättungsmittel einen Glättungskondensator und eine Drosselspule enthält; und
die Resonanzfrequenz des Glättungskondensators und der Drosselspule wenigstens gleich dem vierzigfachen der Frequenz der Wechselstromversorgung (1) ist.

14. Umrichtervorrichtung nach Anspruch 13, wobei der Glättungskondensator ein Folienkondensator ist.

15. Klimaanlage, enthaltend:
eine Umrichtervorrichtung nach Anspruch 1; und
einen Kompressor, der einen Motor (5) enthält.

## Revendications

1. Dispositif onduleur comprenant :
un moyen de redressement (2) qui redresse une tension alternative à partir d'un bloc d'alimentation en courant alternatif (1) et génère une tension redressée ;
un moyen de lissage (3) qui permet de lisser la tension redressée et génère une tension lisse contenant la forme d'onde d'une période de tension lisse correspondant à la moitié de la période de tension alternative ;
un moyen de conversion CC/CA (4) qui convertit la tension lisse en une tension de commande représentant un courant alternatif modulé en largeur d'impulsion, et fournit la tension de commande à un moteur (5) ;
un moyen de détection de courant (6, 18) qui détecte le courant de moteur circulant vers le moteur en tant que résultat de la tension de commande, le courant de moteur contenant la forme d'onde de la période de tension lisse et des première et quatrième distorsions, et génère un signal de détection de courant ;
un moyen de réglage de vitesse cible (15) qui génère un signal de vitesse cible représentant la vitesse cible du moteur ;
un moyen de génération de commande de courant (8) qui génère un signal de commande de courant représentant une valeur de commande de courant de moteur sur la base du signal de détection de courant et du signal de vitesse cible ;
un premier moyen de correction de commande de courant (13) qui génère un premier signal de correction de commande de courant permettant de corriger la première distorsion sur la base du signal de détection de courant et du signal de commande de courant (S13) ;
un moyen de sortie de commande de tension (9, 17) qui génère et délivre en sortie un signal de commande de tension (S17) sur la base du signal de détection de courant, du signal de commande de courant, et du premier signal de correction de commande de courant ;
un moyen de génération de signal de modulation de largeur d'impulsion (10) qui génère le signal de modulation de largeur d'impulsion (S10) sur la base du signal de commande de tension ;
un moyen de correction de commande de tension (11) qui génère un signal de correction de commande de tension permettant de corriger la quatrième distorsion sur la base du signal de détection de courant et du signal de vitesse cible ; et
un moyen de génération de signal à moduler (16) qui ajoute le signal de commande de tension et le signal de correction de commande de tension, et délivre en sortie le signal somme résultant comme étant le signal à moduler ;
où :
ledit moyen de génération de signal de modulation de largeur d'impulsion (10) génère le signal de modulation de largeur d'impulsion (S10) sur la base du signal à moduler (S16), et
où ledit moyen de conversion CC/CA (4) génère la tension de commande sur la base du signal de modulation de largeur d'impulsion (S10),
ledit moyen de correction de commande de tension (11)
comporte une unité de commande (43) qui génère un signal de période de correction représentant soit une période de correction de longueur nulle ou une période de correction de longueur non nulle pendant chaque période de tension lisse ; et
génère un signal de correction de commande de tension lorsque le signal de période de correction est dans la période de correction non nulle ; et
l'unité de commande (43) règle au moins un point parmi les points initial et final dans la période de correction non nulle à un moment souhaité dans chaque période de tension lisse.

2. Dispositif onduleur selon la revendication 1, dans lequel :
ledit moyen de détection de courant (6) détecte un courant de moteur contenant une deuxième distorsion et une troisième distorsion ;
ledit moyen de génération de signal de modulation de largeur d'impulsion (10) génère un signal de commutation qui indique le moment de commutation du courant de moteur ; et
ledit premier moyen de correction de commande de courant (13) comporte
un deuxième moyen de correction de commande de courant qui génère un deuxième signal de correction de commande de courant permettant de corriger la deuxième distorsion sur la base du signal de détection de courant et du signal de commande de courant, et
un troisième moyen de correction de commande de courant qui génère un troisième signal de correction de commande de courant permettant de corriger la troisième distorsion sur la base du signal de détection de courant, du signal de commande de courant, et du signal de commutation.

3. Dispositif onduleur selon la revendication 1, comprenant en outre :
un moyen de détection de phase de rotation (7) qui détecte un signal de phase de rotation représentant la phase de rotation du moteur (5) sur la base du signal de détection de courant (S6) ;
où ledit moyen de correction de commande de tension (11) génère un signal de correction de commande de tension (S11) sur la base du signal de phase de rotation (S7) et du signal de commande de courant (S8).

4. Dispositif onduleur selon la revendication 1, comprenant en outre :
un moyen de détection de phase de tension (12) qui détecte un signal de phase de tension (S12) représentant la phase de la tension lisse ;
où ledit moyen de correction de commande de tension (11) génère le signal de correction de commande de tension (S11) sur la base du signal de phase de tension (S12).

5. Dispositif onduleur selon la revendication 1, dans lequel :
ledit moyen de correction de commande de tension (11) modifie au moins l'une parmi l'amplitude et la phase du signal de correction de commande de tension (S11).

6. Dispositif onduleur selon la revendication 1, comprenant en outre :
un moyen de détection de phase de rotation (7) qui détecte un signal de phase de rotation (S7) représentant la phase de rotation du moteur (5) sur la base du signal de détection de courant (S6) ;
où ledit moyen de génération de commande de courant (8) génère un signal de commande de courant (S8) sur la base du signal de phase de rotation et du signal de vitesse cible,
ledit premier moyen de correction de commande de courant (13) génère le premier signal de commande de courant sur la base du signal de phase de rotation (S7) et du signal de commande de courant, et
ledit moyen de sortie de commande de tension (9, 17) délivre en sortie le signal de commande de tension sur la base du signal de phase de rotation (S7), du signal de commande de courant, et du premier signal de correction de commande de courant.

7. Dispositif onduleur selon la revendication 1, dans lequel :
ledit moyen de sortie de commande de tension (9, 17) comporte
une unité de génération de signal somme (17) qui ajoute le premier signal de correction de commande de courant au signal de commande de courant et génère le signal somme, et
un moyen de génération de commande de tension (9) qui génère un signal de commande de tension (S9) sur la base du signal de détection de courant et du signal somme.

8. Dispositif onduleur selon la revendication 1, comprenant en outre :
un moyen de détection de phase de tension (12) qui détecte un signal de phase de tension (S12) représentant la phase de la tension lisse.

9. Dispositif onduleur selon la revendication 8, dans lequel :
ledit moyen de génération de commande de courant (8) génère le signal de commande de courant sur la base du signal de phase de tension (S12).

10. Dispositif onduleur selon la revendication 8, dans lequel
ledit premier moyen de correction de commande de courant (13) génère le premier signal de correction de commande de courant sur la base du signal de phase de tension (S12).

11. Dispositif onduleur selon la revendication 1, dans lequel
ledit premier moyen de correction de commande de courant (13)
comporte une unité de commande (43) qui génère un signal de période de correction représentant soit une période de correction de longueur nulle ou une période de correction de longueur non nulle pendant chaque période de tension lisse ; et
génère un premier signal de correction de commande de courant lorsque le signal de période de correction est dans la période de correction non nulle ; et
l'unité de commande (43) règle au moins un point parmi les points initial et final dans la période de correction non nulle à un moment souhaité dans chaque période de tension lisse.

12. Dispositif onduleur selon la revendication 1, dans lequel ledit premier moyen de correction de commande de courant (13) modifie au moins l'une parmi l'amplitude et la phase du premier signal de correction de commande de courant.

13. Dispositif onduleur selon la revendication 1, dans lequel :
ledit moyen de lissage comporte un condensateur de lissage et une bobine de réactance ; et
la fréquence de résonance du condensateur de lissage et de la bobine de réactance est au moins quarante fois la fréquence du bloc d'alimentation en courant alternatif (1).

14. Dispositif onduleur selon la revendication 13, dans lequel le condensateur de lissage est un condensateur à film.

15. Appareil de conditionnement d'air comprenant :
le dispositif onduleur selon la revendication 1 ; et
un compresseur comportant un moteur (5).
